# EUROPEAN PATENT APPLICATION

(11) **EP 4 844 242 A1**
(43) Date of publication of application: **25.11.2026**
(21) Application number: 25748049.1
(22) Date of filing: 05.02.2025
(51) Int. Cl.: F16H 9/18

(54) **CONTINUOUSLY VARIABLE TRANSMISSION, AND ALL-TERRAIN VEHICLE USING SAME**

(30) Priority: 01.02.2024 CN 202410149046; 01.04.2024 CN 202410391237
(71) Applicant: Zhejiang CFMOTO Power Co., Ltd., Hangzhou, Zhejiang 311199 (CN)
(72) Inventor: XU, Guilin, Hangzhou, Zhejiang 311199 (CN); SHEN, Quan, Hangzhou, Zhejiang 311199 (CN); XU, Jiangwei, Hangzhou, Zhejiang 311199 (CN); ZHAO, Xiaopeng, Hangzhou, Zhejiang 311199 (CN); CAO, Weiwang, Hangzhou, Zhejiang 311199 (CN); WANG, Hao, Hangzhou, Zhejiang 311199 (CN)
(74) Representative: Sun, Yiming
(86) International application number: PCT/CN2025/075812
(87) International publication number: WO 2025/162489

(57) **Abstract**

A continuously variable transmission includes a driving transmission mechanism, a driven transmission mechanism, and a drive belt. The driven transmission mechanism is connected to the driving transmission mechanism in a transmission mode. The driving transmission mechanism includes a main shaft, a driving movable sheave assembly, a driving fixed sheave assembly, a positioning plate assembly and a thrust plate assembly. The driving movable sheave assembly is sleeved on the main shaft, and mates with the main shaft in a clearance fit. The driving movable sheave assembly further includes a driving movable sheave body and a centrifugal weight, and the centrifugal weight is rotatably connected to the driving movable sheave body. The driving fixed sheave assembly is fixedly connected to the main shaft. The positioning plate assembly mates with the main shaft in a clearance fit, and the positioning plate assembly is fixedly connected to the driving movable sheave assembly. The thrust plate assembly further includes an elastic member and a thrust plate body. The thrust plate body is fixedly connected to the main shaft. The elastic member is disposed between the positioning plate assembly and the thrust plate body, and the elastic member applies a pre-load force to make the driving movable sheave assembly move away from the driving fixed sheave assembly. This arrangement can effectively make operation of the continuously variable transmission smoother, improve transmission efficiency, and improve serviceability.

## Description

### RELATED APPLICATIONS

This present application claims the benefits of priority to Chinese Patent Application No. 202410149046.3, filed on February 1, 2024 and entitled "ALL-TERRAIN VEHICLE", and Chinese Patent Application No. 202410391237.0, filed on April 1, 2024 and entitled "Continuously Variable Transmission and All-Terrain Vehicle Using the Same", the entire contents of which are incorporated herein by reference.

### FIELD OF THE DISCLOSURE

The present application relates to the field of motor vehicles, and in particular to an all-terrain vehicle and a continuously variable transmission thereof.

### BACKGROUND OF THE DISCLOSURE

An all-terrain vehicle refers to a vehicle that is capable of traveling on any terrain and can travel freely on terrain on which ordinary vehicles are difficult to drive. The all-terrain vehicle can travel on beaches, riverbeds, forest roads, streams, and harsh desert terrain. In order to reduce driving difficulty for a driver and enable an output transmission ratio of the engine to be adjusted in real time according to driving conditions, the all-terrain vehicle is equipped with a continuously variable transmission to adapt to variable output conditions. After assembly of a continuously variable transmission in the related art is completed, the continuously variable transmission generally has problems of difficult disassembly and poor replaceability of individual parts. When a failure occurs, a large range of parts needs to be replaced, resulting in relatively high maintenance cost.

### SUMMARY OF THE INVENTION

Embodiments of the present invention provide a continuously variable transmission and an all-terrain vehicle using the continuously variable transmission, so as to solve at least one of the technical problems existing in the background.

In a first aspect, a continuously variable transmission includes a driving transmission mechanism, a driven transmission mechanism, and a drive belt. The driven transmission mechanism is connected to the driving transmission mechanism in a transmission mode. The drive belt is connected to the driven transmission mechanism and the driving transmission mechanism in a transmission mode, respectively to transmit a driving force between the driven transmission mechanism and the driving transmission mechanism. The driving transmission mechanism includes a main shaft, a driving movable sheave assembly. The driving movable sheave assembly is sleeved on the main shaft, and the driving movable sheave assembly mates with the main shaft in a clearance fit. The driving movable sheave assembly further includes a driving movable sheave body and a centrifugal weight, and the centrifugal weight is rotatably connected to the driving movable sheave body. The driving fixed sheave assembly is fixedly connected to the main shaft. A driving fixed sheave assembly, a thrust plate assembly, and a positioning plate assembly. The positioning plate assembly mates with the main shaft in a clearance fit. The positioning plate assembly is disposed on a side of the thrust plate assembly away from the driving movable sheave assembly and the positioning plate assembly is fixedly connected to the driving movable sheave assembly. The thrust plate assembly further includes an elastic member and a thrust plate body. The thrust plate body is fixedly connected to the main shaft. The elastic member is disposed between the positioning plate assembly and the thrust plate body, and the elastic member applies a pre-load force to make the driving movable sheave assembly move away from the driving fixed sheave assembly. The driven transmission mechanism includes a driven shaft, a driven movable sheave assembly, a driven fixed sheave assembly, and a ramp hub assembly. The driven movable sheave assembly mates with the driven shaft in a clearance fit. The driven fixed sheave assembly is fixedly connected to the driven shaft, and the driven fixed sheave assembly further includes a driven roller. The ramp hub assembly is at least partially disposed between the driven movable sheave assembly and the driven fixed sheave assembly. The ramp hub assembly is fixedly connected to the driven movable sheave assembly. The ramp hub assembly abuts against the driven fixed sheave assembly by the driven roller. The ramp hub assembly and the driven movable sheave assembly can synchronously slide along an axial direction of the driven shaft under pressing of the drive belt. An elastic member is further disposed between the driven fixed sheave assembly and the ramp hub assembly, and applies a pre-load force to make the driven fixed sheave assembly and the ramp hub assembly move toward each other.

In a second aspect, a continuously variable transmission includes a driving transmission mechanism, a driven transmission mechanism, and a drive belt. The driven transmission mechanism is connected to the driving transmission mechanism in a transmission mode. The drive belt is connected to the driven transmission mechanism and the driving transmission mechanism in a transmission mode, respectively to transmit a driving force between the driven transmission mechanism and the driving transmission mechanism. The driving transmission mechanism includes a main shaft, a driving movable sheave assembly, a driving fixed sheave assembly, a positioning plate assembly, and a thrust plate assembly. The driving movable sheave assembly is sleeved on the main shaft, and the driving movable sheave assembly mates with the main shaft in a clearance fit. The driving movable sheave assembly further includes a driving movable sheave body and a centrifugal weight, and the centrifugal weight is rotatably connected to the driving movable sheave body. The driving fixed sheave assembly is fixedly connected to the main shaft. The positioning plate assembly mates with the main shaft in a clearance fit, and the positioning plate assembly is fixedly connected to the driving movable sheave assembly. The thrust plate assembly further includes an elastic member and a thrust plate body. The thrust plate body is fixedly connected to the main shaft. The elastic member is disposed between the positioning plate assembly and the thrust plate body, and the elastic member applies a pre-load force to make the driving movable sheave move away from the driving fixed sheave assembly.

In a third aspect, a continuously variable transmission includes a driving transmission mechanism, a driven transmission mechanism, and a drive belt. The driven transmission mechanism is connected to the driving transmission mechanism in a transmission mode. The drive belt is connected to the driven transmission mechanism and the driving transmission mechanism in a transmission mode, respectively to transmit a driving force between the driven transmission mechanism and the driving transmission mechanism. The driving transmission mechanism includes a main shaft, a driving movable sheave assembly, a driving fixed sheave assembly, a positioning plate assembly, and a thrust plate assembly. The driving movable sheave assembly is sleeved on the main shaft, and the driving movable sheave assembly mates with the main shaft in a clearance fit. The driving movable sheave assembly further includes a driving movable sheave body and a centrifugal weight, and the centrifugal weight is rotatably connected to the driving movable sheave body. The driving fixed sheave assembly is fixedly connected to the main shaft. The positioning plate assembly mates with the main shaft in a clearance fit. The positioning plate assembly is fixedly connected to the driving movable sheave assembly. The thrust plate assembly is sleeved on the main shaft and is fixedly connected to the main shaft. The thrust plate assembly further includes an elastic member and a thrust plate body. The elastic member is disposed between the positioning plate assembly and the thrust plate body, and the elastic member applies a pre-load force to make the driving movable sheave move away from the driving fixed sheave assembly. An accommodation space is defined between the driving movable sheave assembly and the thrust plate assembly, and the centrifugal weight is positioned within the accommodation space, one end of the centrifugal weight abuts against the thrust plate assembly, and the other end of the centrifugal weight is rotatably connected to the driving movable sheave assembly through a rotary connecting shaft. An abutment portion is arranged one end of the rotary connecting shaft, and a connection portion is arranged on the other end of the rotary connecting shaft, the driving movable sheave assembly comprises a first mounting portion and a second mounting portion, and the centrifugal weight is at least partially positioned between the first mounting portion and the second mounting portion, and the rotary connecting shaft passes through the first mounting portion, the centrifugal weight, and the second mounting portion, respectively. When the centrifugal weight and the driving movable sheave assembly are in the mounted state, the abutment portion abuts against the side of the first mounting portion away from the second mounting portion, and the connecting portion abuts against the side of the second mounting part away from the second mounting portion. The rotary connecting shaft mates with the first mounting portion, the second mounting portion, and the centrifugal weight, respectively in a clearance fit.

In a fourth aspect, a continuously variable transmission includes a driving transmission mechanism, a driven transmission mechanism, and a drive belt. The driven transmission mechanism is connected to the driving transmission mechanism in a transmission mode. The drive belt is connected to the driven transmission mechanism and the driving transmission mechanism in a transmission mode, respectively to transmit a driving force between the driven transmission mechanism and the driving transmission mechanism. The driving transmission mechanism includes a main shaft, a driving movable sheave assembly, a driving fixed sheave assembly, a positioning plate assembly, and a thrust plate assembly. The driving movable sheave assembly is sleeved on the main shaft, and the driving movable sheave assembly mates with the main shaft in a clearance fit. The driving movable sheave assembly further includes a driving movable sheave body and a centrifugal weight, and the centrifugal weight is rotatably connected to the driving movable sheave body. The driving fixed sheave assembly is fixedly connected to the main shaft. The positioning plate assembly mates with the main shaft in a clearance fit, and the positioning plate assembly is fixedly connected to the driving movable sheave assembly. The thrust plate assembly is sleeved on the main shaft and is fixedly connected to the main shaft. The thrust plate assembly further includes an elastic member and a thrust plate body. The elastic member is disposed between the positioning plate assembly and the thrust plate body, and the elastic member applies a pre-load force to make the driving movable sheave move away from the driving fixed sheave assembly. An accommodation space is defined between the driving movable sheave assembly and the thrust plate assembly, and the centrifugal weight is positioned within the accommodation space, one end of the centrifugal weight abuts against the thrust plate assembly, and the other end of the centrifugal weight is rotatably connected to the driving movable sheave assembly through a rotary connecting shaft. The rotary connecting shaft includes a connecting portion and an abutment portion, and the driving movable sheave assembly comprises a first mounting portion and a second mounting portion, the second mounting portion has an abutment surface facing towards the first mounting portion. When the centrifugal weight and the driving movable sheave assembly are in the mounted state, the rotary connecting shaft passes through the first mounting portion, the centrifugal weight, and the second mounting portion, respectively, the abutment portion abuts against the abutment surface, and the connecting portion abut against the side of the second mounting portion away from the first mounting portion.

Details of one or more embodiments of the present application are set forth in the following drawings and description, so that other features, objectives, and advantages of the present application become more readily understandable.

### BRIEF DESCRIPTION OF THE DRAWINGS

The drawings described herein are provided for further understanding of the present application and constitute a part of the present application. The exemplary embodiments of the present application and the description thereof are intended to explain the present application and do not constitute an improper limitation of the present application. In the FIGS:
FIG. 1 is a perspective view of an all-terrain vehicle according to an embodiment of the present application;
FIG. 2 is a sectional view showing a portion of a continuously variable transmission according to an embodiment of the present application;
FIG. 3 is a sectional view of a driving transmission mechanism of the continuously variable transmission according to an embodiment of the present application;
FIG. 4 is a perspective view of a driving movable sheave assembly and a thrust plate assembly according to an embodiment of the present application;
FIG. 5 is an exploded view of the driving transmission mechanism of the continuously variable transmission according to an embodiment of the present application;
FIG. 6 is a sectional view showing the thrust plate assembly of the driving transmission mechanism according to an embodiment of the present application;
FIG. 7 is an exploded view of a positioning plate assembly according to an embodiment of the present application;
FIG. 8 is an exploded view of the thrust plate assembly of the driving transmission mechanism according to an embodiment of the present application;
FIG. 9 is an exploded view of the driving movable sheave assembly according to an embodiment of the present application;
FIG. 10 is a view showing the comparison when the thrust plate assembly is at a first position and a second position relative to a centrifugal weight respectively according to an embodiment of the present application;
FIG. 11 is a view when the thrust plate assembly is at the second position and a third position relative to the centrifugal weight according to an embodiment of the present application;
FIG. 12a shows a first embodiment of mounting between the centrifugal weight and the driving movable sheave assembly according to an embodiment of the present application;
FIG. 12b shows a second embodiment of mounting between the centrifugal weight and the driving movable sheave assembly according to an embodiment of the present application;
FIG. 13a is a sectional view of a braking assembly according to an embodiment of the present application;
FIG. 13b is an enlarged partial view of portion A in FIG. 13a;
FIG. 14 is an exploded view of the driving transmission mechanism according to an embodiment of the present application;
FIG. 15a is a sectional view of a portion of the braking assembly in a non-operating state according to an embodiment of the present application;
FIG. 15b is a sectional view of a portion of the braking assembly in an operating state according to an embodiment of the present application;
FIG. 16 is a sectional view showing the mounting of a driven fixed sheave assembly and a driven shaft according to an embodiment of the present application;
FIG. 17 is an exploded view of the driven fixed sheave assembly according to an embodiment of the present application;
FIG. 18a is a sectional view of a portion of a ramp hub structure according to an embodiment of the present application;
FIG. 18b is an enlarged partial view of portion B in FIG. 18a;
FIG. 19 is a perspective view of the ramp hub structure according to an embodiment of the present application;
FIG. 20a shows a first embodiment of a sliding groove according to an embodiment of the present application;
FIG. 20b shows a second embodiment of the sliding groove according to an embodiment of the present application.

### DETAIL DESCRIPTION

The following will provide a detailed description of the present invention in conjunction with the specific embodiment shown in the accompanying drawings, but the embodiment shown and the embodiments discussed do not limit the present invention. Structural, method, or functional changes may be made by ordinary technical personnel in the art based on these disclosed embodiments, and such changed embodiments are also included in the scope of protection of the present invention.

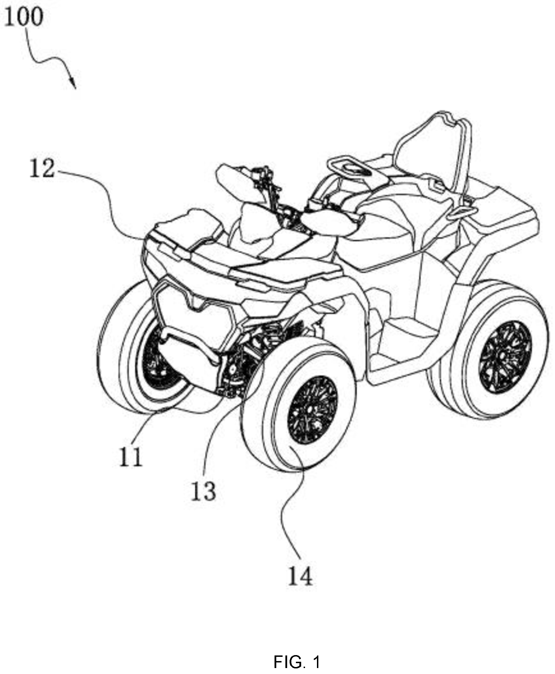

As shown in FIG. 1, the present disclosure shows an all-terrain vehicle 100. The all-terrain vehicle 100 includes a frame 11, a vehicle cover 12, a drive system 13 and traveling members 14. The drive system 13 is at least partially disposed on the frame 11 and supported by the frame 11. The vehicle cover 12 is at least partially disposed on the frame 11 and covers the drive assembly 13 to protect the drive system 13. The traveling members 14 are at least partially disposed below the frame 11 and is rotatably connected to the frame 11. The drive system 13 is connected to the traveling members 14 for driving the traveling members 14 to operate.

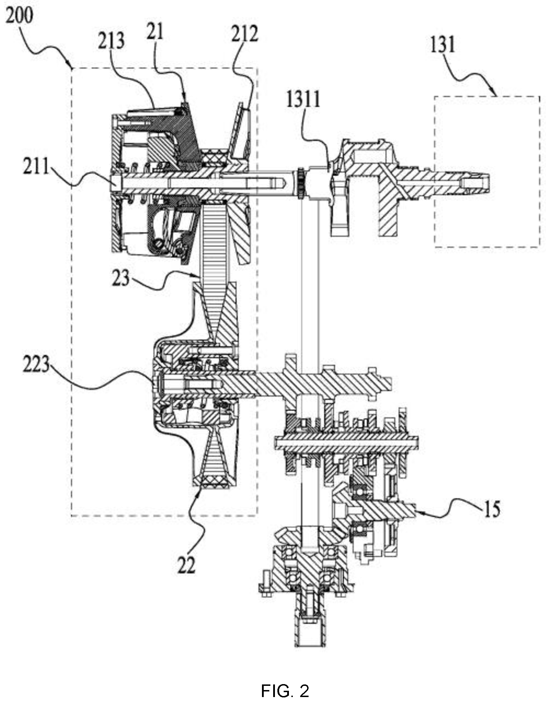

As shown in FIG. 1 and FIG. 2, the drive system 13 includes an engine 131. The all-terrain vehicle 100 provided by the present disclosure further includes a transmission assembly 15 and a continuously variable transmission 200. The continuously variable transmission 200 is disposed on a driving force transmission path between the drive system 13 and the traveling members 14 to adjust an output transmission ratio of the driving force of the drive system 13. In one embodiment, the transmission assembly 15 is at least partially disposed on the driving force transmission path between the continuously variable transmission 200 and the traveling assembly 14, and is used to further perform speed-changing processing on the driving force output by the continuously variable transmission 200. Optionally, the continuously variable transmission 200 includes a driving transmission mechanism 21 connected to the engine 131 in a transmission mode and a driven transmission mechanism 22 connected to the driving transmission mechanism 21 in a transmission mode. More optionally, a drive belt 23 is disposed between the driving transmission mechanism 21 and the driven transmission mechanism 22. The drive belt 23 connects the driving transmission mechanism 21 and the driven transmission mechanism 22 to achieve the transmission of driving force. Optionally, the engine 131 includes a crankshaft 1311 for outputting a driving force. The driving transmission mechanism 21 includes a main shaft 211, a driving fixed sheave assembly 212, and a driving movable sheave assembly 213. The main shaft 211 is connected to the crankshaft 1311 in a transmission mode. The driving fixed sheave assembly 212 and the driving movable sheave assembly 213 are disposed on the main shaft 211. The drive belt 23 is sleeved on the main shaft 211 and is at least partially disposed between the driving fixed sheave assembly 212 and the driving movable sheave assembly 213.

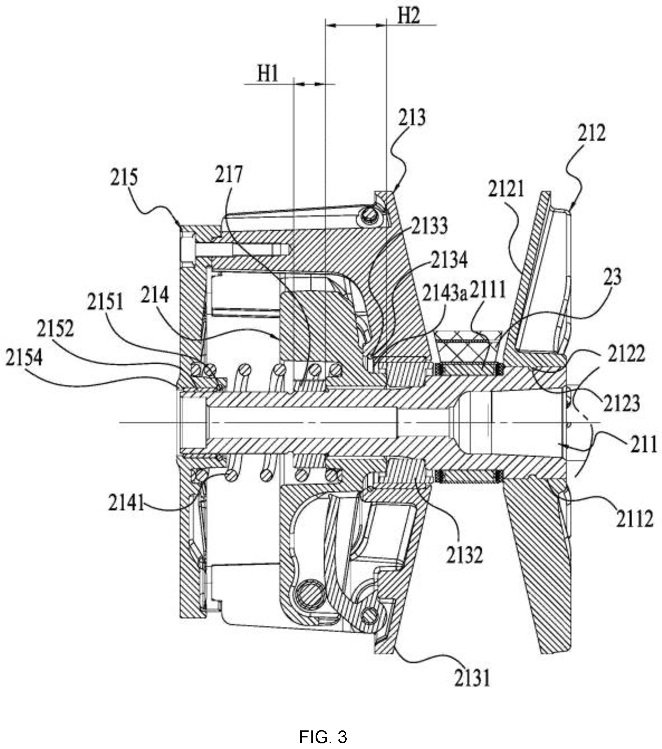

As shown in FIG. 3, a bearing 2111 is further disposed on an outer periphery of the main shaft 211. In an axial direction of the main shaft 211, the bearing 2111 is further disposed between the driving fixed sheave assembly 212 and the driving movable sheave assembly 213. In a radial direction of the main shaft 211, the bearing 2111 is further disposed between the drive belt 23 and the main shaft 211. That is, when the drive belt 23 is sleeved on the bearing 2111, the bearing 2111 is disposed between the drive belt 23 and the main shaft 211, thereby preventing the drive belt 23 from directly contacting the main shaft 211 and causing wear to the main shaft 211, which would otherwise reduce transmission efficiency or even damage the continuously variable transmission 200. In the present disclosure, the bearing 2111 is provided as a bidirectional bearing. That is, the drive belt 23 can freely rotate forward or in reverse relative to the main shaft 211, and therefore the drive belt 23 does not transmit a driving force to the main shaft 211. It should be noted that, when the all-terrain vehicle 100 is in a forward-traveling state, a rotational direction of the main shaft 211 is defined as a forward rotation direction; conversely, the rotational direction of the main shaft 211 is a reverse rotation direction. The driving fixed sheave assembly 212 is fixedly connected to the main shaft 211, that is, relative rotation or sliding cannot occur between the driving fixed sheave assembly 212 and the main shaft 211. The driving movable sheave assembly 213 is connected to the main shaft 211 in a clearance fit, and the driving movable sheave assembly 213 can slide relative to the main shaft 211 along an axial direction of the main shaft 211. It should be noted that, when the driving movable sheave assembly 213 slides toward the driving fixed sheave assembly 212 relative to the axial direction of the main shaft 211, a space between the driving movable sheave assembly 213 and the driving fixed sheave assembly 212 is compressed, and the drive belt 23 shifts radially away from the axis of the main shaft 211 under compression of the space on two sides, that is, the drive belt 23 moves in the radial direction of the main shaft 211. At this time, a rotational diameter of the drive belt 23 is increased, thereby changing a speed ratio transmitted by the drive belt 23. The driving transmission mechanism 21 further includes a thrust plate assembly 214 and a positioning plate assembly 215. The positioning plate assembly 215 is sleeved on the main shaft 211 and is disposed on the side of the driving movable sheave assembly 213 away from the driving fixed sheave assembly 212. The thrust plate assembly 214 is sleeved on the main shaft 211 and is disposed between the positioning plate assembly 215 and the driving movable sheave assembly 213. The driving movable sheave assembly 213 is fixedly connected to the positioning plate assembly 215, and both the driving movable sheave assembly 213 and the positioning plate assembly 215 are connected to the main shaft 211 in a clearance fit. That is, the driving movable sheave assembly 213 and the positioning plate assembly 215 can synchronously slide relative to the main shaft 211 along the axial direction of the main shaft 211. The thrust plate assembly 214 is fixedly connected to the main shaft 211, that is, relative sliding or relative rotation cannot occur between the thrust plate assembly 214 and the main shaft 211. An elastic member 2141 is further arranged between the positioning plate assembly 215 and the thrust plate assembly 214. The elastic member 2141 is in a compressed state between the thrust plate assembly 214 and the positioning plate assembly 215. That is, the elastic member 2141 is capable of applying to the positioning plate assembly 215, a force directed along the axial direction of the main shaft 211 and away from the driving fixed sheave assembly 212. It should be noted that, because the positioning plate assembly 215 is fixedly connected to the driving movable sheave assembly 213, the elastic member 2141 also applies, to the driving movable sheave assembly 213, a force away from the driving fixed sheave assembly 212. This arrangement ensures that when no external force acts on the driving movable sheave assembly 213 and the positioning plate assembly 215, the driving movable sheave assembly 213 and the positioning plate assembly 215 remain at an initial position adjacent to the driving fixed sheave assembly 212, thereby keeping the drive belt 23 in a position consistent with the initial position.

As shown in FIG. 3 to FIG. 5, optionally, an internal spline is defined on the thrust plate assembly 214, an external spline is defined on the main shaft 211, and the thrust plate assembly 214 and the main shaft 211 are connected to each other by the spline. Further, the driving transmission mechanism 21 further includes a nut 217. The nut 217 is sleeved on the main shaft 211 and is threadedly connected to the main shaft 211. Further, when the nut 217 and the main shaft 211 are in a fixed state, the nut 217 abuts against the thrust plate assembly 214 and is positioned on a side away from the driving fixed sheave assembly 212. the nut 217. That is, one end of the thrust plate assembly 214 abuts against the nut 217, and the other end of the thrust plate assembly 214 abuts against the driving movable sheave assembly 213, so as to restrict sliding of the thrust plate assembly 214 relative to an extension direction of the axis of the main shaft 211. Through the above arrangement, it can be known that the fixed connection between the thrust plate assembly 214 and the main shaft 211 is formed by two parts. Optionally, a spline connection portion between the thrust plate assembly 214 and the main shaft 211 restricts circumferential rotation therebetween, so that rotational driving force of the main shaft 211 is transmitted to the thrust plate assembly 214 through the spline connection, and axial positioning between the thrust plate assembly 214 and the main shaft 211 is implemented through a connection portion of the nut 217. Compared with the related art in which the thrust plate assembly and the main shaft are directly connected by a bolt, this connection manner decomposes a contact force into an axial force component and a circumferential force component, which are borne by two different components respectively. Therefore, it not only has higher connection strength and avoids bolt failure, but also can adapt to extreme instantaneous acceleration or braking operation of the all-terrain vehicle 100, thereby avoiding reverse loosening of the connection between the thrust plate assembly 214 and the main shaft 211, which would otherwise cause failure of the transmission. As described above, the fixed connection between the nut 217 and the main shaft 211 is used for axial fixation of the thrust plate assembly 214, and the connection between the thrust plate assembly 214 and the main shaft 211 is used to transmit circumferential driving force. A contact length occupied by the nut 217 on the main shaft 211 along the axial direction of the main shaft 211 is defined as a first fixing length H1, and a contact length occupied by the thrust plate assembly 214 on the main shaft 211 along the axial direction of the main shaft 211 is defined as a second fixing length H2. In one optional embodiment, a ratio of the first fixing length H1 to the second fixing length H2 is greater than or equal to 0.4 and less than or equal to 0.6. This arrangement can effectively control contact length between each of the two components and the main shaft 211, so that the connection between the thrust plate assembly 214 and the main shaft 211 is more secure under the most reasonable setting length. Optionally, in the present disclosure, the first fixing length H1 is greater than or equal to 12.5 mm and less than or equal to 16.5 mm. Correspondingly, a length range of the second fixing length H2 is greater than or equal to 27.5 mm and less than or equal to 31.25 mm. Selection of the above mounting lengths can effectively ensure mounting strength between the thrust plate assembly 214 and the main shaft 211 and can also effectively avoid connection failure therebetween under extreme operating conditions.

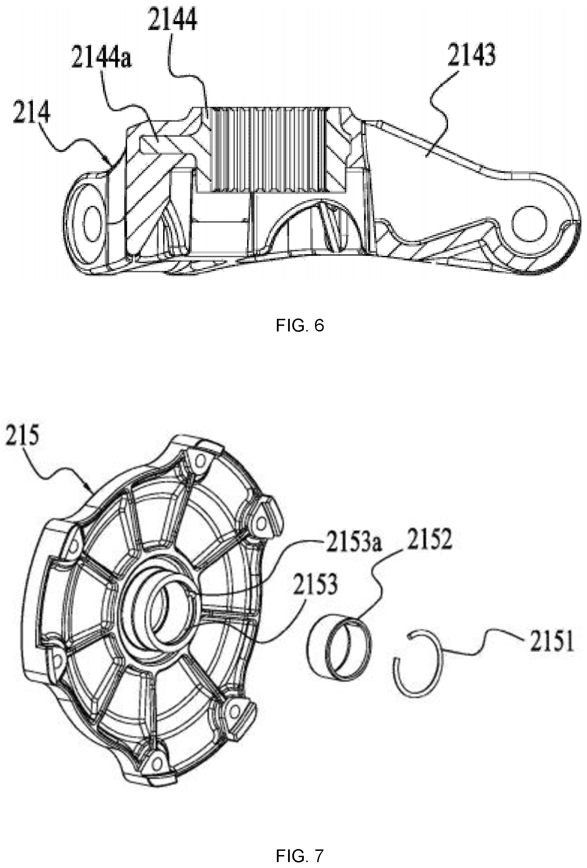

As shown in FIG. 6, in an optional embodiment, the thrust plate assembly 214 in the present disclosure includes a thrust plate body 2143 and a connecting portion 2144. The connecting portion 2144 is disposed between the thrust plate body 2143 and the main shaft 211, and the internal spline is disposed on the connecting portion 2144, so as to achieve the splined connection between the thrust plate body 2143 and the main shaft 211. Optionally, the thrust plate body 2143 and the connecting portion 2144 are formed by a secondary die-casting process. That is, the connecting portion 2144 is made of a first material, and the thrust plate body 2143 is made of a second material. The connecting portion 2144 is first manufactured by casting or other processes, and then select an appropriate mold for direct casting of the thrust disk body 2143 outside the connecting portion 2144, or employ alternative processes to form the thrust disk body 2143, so as to realize bonding between the connecting portion 2144 and the thrust disk body 2143. Finally, the thrust disk body 2143 and the connecting portion 2144 are integrally formed as a whole. In this way, in the selection of materials, the connecting portion 2144 may be selected as a material having relatively high strength and good wear resistance, so as to ensure connection strength between the thrust plate assembly 214 and the main shaft 211. The thrust plate body 2143 may be selected as a material having a relatively small density on the premise of ensuring strength, so as to reduce the overall weight of the thrust plate assembly 214, reduce initial rotational resistance, and improve driving force transmission efficiency. In one embodiment, the first material is a steel and the second material is an aluminum. It should be noted that the first material may also be other hard materials, and the second material may also be other lightweight materials, which will not be described in detail herein.

Optionally, the connecting portion 2144 includes an insert 2144a disposed adjacent to the thrust plate body 2143. The insert 2144a is radially distributed along the axis of the main shaft 211, and the insert 2144a is substantially disposed inside the thrust plate body 2143. That is, the insert 2144a is substantially covered by the thrust plate body 2143. This arrangement can effectively increase a contact area between the connecting portion 2144 and the thrust plate body 2143, so that the two materials can be fused more tightly, thereby enhancing overall rigidity of the thrust plate assembly 214. In a more optional embodiment, when viewed along an axial direction of the thrust plate assembly 214, the insert 2144a is arranged as a non-circular structure. That is, when the connecting portion 2144 is rotated about the axis of the thrust plate assembly 214, an acting forces having opposite direction and equal magnitude can be formed between the insert 2144a and the thrust plate body 2143. In this way, failure caused by long-term transmission between the first material and the second material can be effectively avoided, and transmission strength of the thrust plate assembly can be effectively ensured.

As shown in FIG. 3 and FIG. 7, as described above, the positioning plate assembly 215 mates with the main shaft 211 in a clearance fit. Optionally, a wire retaining ring 2151 and a self-lubricating bearing 2152 are further disposed between the positioning plate assembly 215 and the main shaft 211. An outer ring of the self-lubricating bearing 2152 mates with an inner ring of the positioning plate assembly 215 in an interference fit, and an inner ring of the self-lubricating bearing 2152 mates with the main shaft 211 in a clearance fit and can slide relative to the main shaft 211 along an extension direction of the axis of the main shaft 211. Along an axial direction of the positioning plate assembly 215, an abutment portion 2154 is arranged on one end of the positioning plate assembly 215 (see FIG. 3). One end of the self-lubricating bearing 2152 in the positioning plate assembly 215 abuts against the abutment portion 2154, thereby realizing axial limiting of the self-lubricating bearing 2152 at its one end. The positioning plate assembly 215 further defines a limiting groove 2153. The limiting groove 2153 is defined on the end of the self-lubricating bearing 2152 away from the abutment portion 2154. At least portion of the wire retaining ring 2151 is disposed in the limiting groove 2153, and at least portion of the wire retaining ring 2151 is disposed outside the limiting groove 2153 and abuts against the self-lubricating bearing 2152. That is, one end of the self-lubricating bearing 2152 abuts against the abutment portion 2154, and another end of the self-lubricating bearing 2152 abuts against the wire retaining ring 2151. Thus, the self-lubricating bearing 2152 is axially fixed within the inner ring of the positioning plate assembly 215. The above arrangement enables the positioning plate assembly 215 to slide relative to the main shaft 211 through the self-lubricating bearing 2152, thereby avoiding direct contact between the positioning plate assembly 215 and the main shaft 211 and preventing wear of related components.

Further, a disassembly opening 2153a is defined on the limiting groove 2153. The disassembly opening 2153a extends along the axial direction of the positioning plate assembly 215. One end of the disassembly opening 2153a communicates with the limiting groove 2153, and the other end of the disassembly opening 2153a communicates with an end opening of the positioning plate assembly 215 on the side away from the abutment portion 2154. That is, the disassembly opening 2153a is defined to allow a tool to directly extend from outside the positioning plate assembly 215 into the limiting groove 2153 and operate the wire retaining ring 2151 to radially contract and deform, thereby implementing disassembly of the wire retaining ring 2151. When the positioning plate assembly 215 and the main shaft 211 are in the mounted state and the positioning plate assembly 215 does not slide, the end of the main shaft 211 abuts against the positioning plate assembly 215 on the side away from the driving movable sheave assembly 213. One end of the main shaft 211 away from the driving movable sheave assembly 213 abuts against the self-lubricating bearing 2152, so as to restrict a mounting position of the positioning plate assembly 215 on the main shaft 211. At the same time, relative fixation between the positioning plate assembly 215 and the main shaft 211 can be achieved, thereby protecting the positioning plate assembly 215 from disengaging from the main shaft 211. This arrangement allows easier disassembly of the positioning plate assembly compared with the related CVTs in which a flange is directly disposed at one end of the self-lubricating bearing 2152 and the flange abuts against the bearing of the positioning assembly to achieve the position. In the related CVTs, when a bearing inside the positioning plate assembly is damaged or severely worn, only the whole assembly assembled with the bearing can be replaced. That is, the entire positioning plate assembly is replaced. This manner obviously results in higher maintenance and replacement costs. Therefore, the assembly manner in the present disclosure can effectively reduce replacement and maintenance costs of the continuously variable transmission 200 and thus effectively improve product competitiveness.

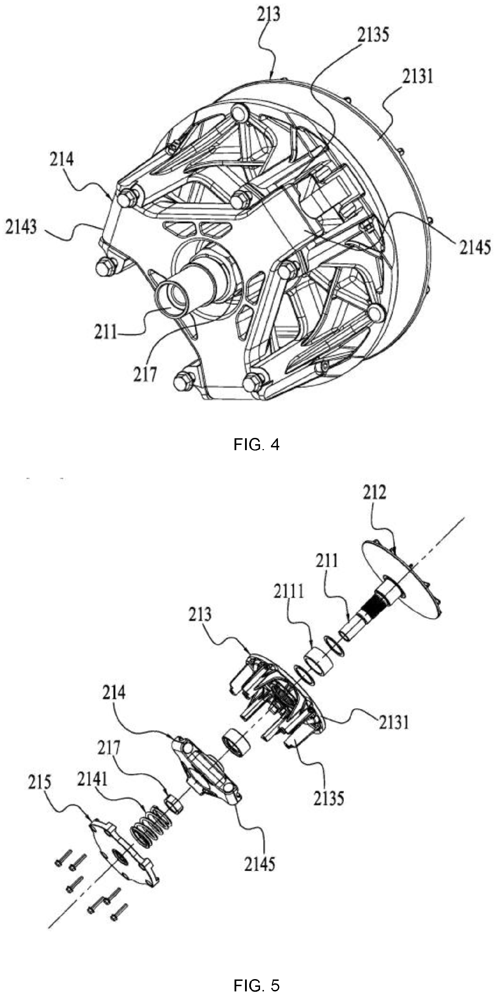

As shown in FIG. 3 and FIG. 5, the driving movable sheave assembly 213 includes a driving movable sheave body 2131 and a bushing 2132 disposed between the driving movable sheave body 2131 and the main shaft 211. A thrust plate assembly 214 abuts against the bushing 2132 at its end adjacent to the driving movable sheave assembly 213, thereby implementing axial positioning. A stepped structure is arranged on the side of the thrust plate assembly 214 close to the bushing 2132. An abutment surface between the thrust plate assembly 214 and the bushing 2132 is defined as a first step, and an abutment surface between the thrust plate assembly 214 and the driving movable sheave assembly 213 is defined as a second step. That is, the abutment surface between the thrust plate assembly 214 and the driving movable sheave assembly 213 is positioned on the side of the abutment surface between the thrust plate assembly 214 and the bushing 2132 close to the positioning plate assembly 215 and above the latter abutment surface. A radial width at the abutment between the thrust plate assembly 214 and the bushing 2132 is less than a radial width of the bushing 2132. This arrangement enables a sliding region 2143a to be formed on the side of the thrust plate assembly 214 close to the driving movable sheave assembly 213. The driving movable sheave body 2131 can slide in the sliding region 2143a along the axial direction of the main shaft 211, and an axial length of the sliding region 2143a is substantially consistent with a maximum sliding distance of the driving movable sheave assembly 213. In one optional embodiment, the bushing 2132 is fixedly connected to the main shaft 211, and the connection manner between the driving movable sheave body 2131 and the bushing 2132 is substantially the same as a connection manner between the positioning plate assembly 215 and the main shaft 211. That is, an inner ring of the driving movable sheave assembly 213 is also provided with a wire retaining ring 2133 and a limiting groove 2134, which will not be described in detail herein. A difference lies in that the wire retaining ring 2133 and the limiting groove 2134 of the driving movable sheave assembly 213 are disposed on the side close to the thrust plate assembly 214. Through the abutment between the wire retaining ring 2133 and the bushing 2132, limiting of the driving movable sheave assembly 213 when sliding to the rightmost end is implemented, and through abutment between the thrust plate assembly 214 and the driving movable sheave assembly 213, limiting of the driving movable sheave assembly 213 when sliding to the leftmost end is implemented.

As shown in FIG. 3, the driving fixed sheave assembly 212 is disposed at the end of the main shaft 211, and the driving fixed sheave assembly 212 is fixedly connected to the main shaft 211. Optionally, the driving fix sheave assembly 212 and the main shaft 211 are also completed by a secondary die-casting process. Compared with a conventional manner in which the driving fixed sheave assembly 212 is mounted to the main shaft 211, in the present disclosure the main shaft 211 is first manufactured by injection molding or other manners, and then a knurling process is performed on a connection region of the main shaft 211 with the driving fixed sheave assembly 213 to form a knurled contact surface 2112 having an uneven surface. After this step is completed, a mold for the driving fixed sheave assembly 212 is placed outside the main shaft 211, namely around the circumference of the knurled contact surface 2112. The driving fixed sheave assembly 212 is manufactured by casting into the mold of the driving fixed sheave assembly 212 via a secondary die-casting process, so that the main shaft 211 is integrally formed with the driving fixed sheave assembly 212. This connection manner has a stronger bonding force and can effectively prevent loosening. A surface on which the driving fixed sheave assembly 212 contacts the drive belt 23 is defined as a working surface 2121. After the fixed connection between the driving fixed sheave assembly 212 and the main shaft 211 is completed, the axis of the integrally formed main shaft 211 may be used as a positioning basis to machine and adjust the working surface 2121. This arrangement can ensure that smoothness of the working surface 2121 of the driving fixed sheave assembly 212 is substantially consistent at various locations. That is, when viewed from a direction perpendicular to the axis of the main shaft 211, no matter what angle the driving fixed sheave assembly 212 rotates to, a projection formed by the surface of the working surface 2121 from that view should be a straight line having a consistent angle with the main shaft 211. This connection manner and processing sequence can maximize transmission smoothness of the drive belt 23 during operation of the driving fixed sheave assembly 212, and can avoid flutter or inconsistent tightness at different rotational angles. In one optional embodiment, a limiting post 2122 and a limiting hole 2123 may be further provided in the connection region between the main shaft 211 and the driving fixed sheave assembly 212. Optionally, the limiting post 2122 facing inside the main shaft 211 may be disposed on the driving fixed sheave assembly 212, and the limiting hole 2123 may be defined on an outer surface of the main shaft 211. The limiting post 2122 is at least partially disposed in the limiting hole 2123. On the basis of knurling, this arrangement can further enhance the degree of connection between the driving fixed sheave assembly 212 and the main shaft 211, thereby increasing connection strength. It should be noted that the limiting post 2122 may alternatively be disposed on the main shaft 211 and the limiting hole 2123 may be disposed on the driving fixed sheave assembly 212.

As shown in FIG. 4 and FIG. 5, the thrust plate assembly 214 and the driving movable sheave assembly 213 can slide relative to each other, and the driving movable sheave assembly 213 can slide relative to the thrust plate assembly 214 along an extension direction of the axis of the main shaft 211. As previously mentioned, the driving movable sheave assembly 213 mates with the main shaft 211 in a clearance fit, and the driving fixed sheave assembly 212 is integrally formed with the main shaft 211. That is, the driving movable sheave assembly 213 and the positioning plate assembly 215 can slide and rotate relative to the main shaft 211. Therefore, in one optional embodiment, in addition to ensuring mutual sliding, the connection between the thrust plate assembly 214 and the driving movable sheave assembly 213 also needs to transmit, to the driving movable sheave assembly 213, rotational driving force obtained by the thrust plate assembly 214 from the main shaft 211, thereby effectively ensuring motion consistency between the driving movable sheave assembly 213 and the driving fixed sheave assembly 212. Optionally, the thrust plate assembly 214 is provided with a connecting end 2145. Correspondingly, the driving movable sheave body 2131 is further provided with a sliding positioning groove 2135. The sliding positioning groove 2135 is fixedly connected to or integrally formed with the driving movable sheave body 2131, and the sliding positioning groove 2135 extends substantially along the extension direction of the main shaft 211. The connecting end 2145 is at least partially disposed in the sliding positioning groove 2135 and can slide substantially along the extension direction of the sliding positioning groove 2135.

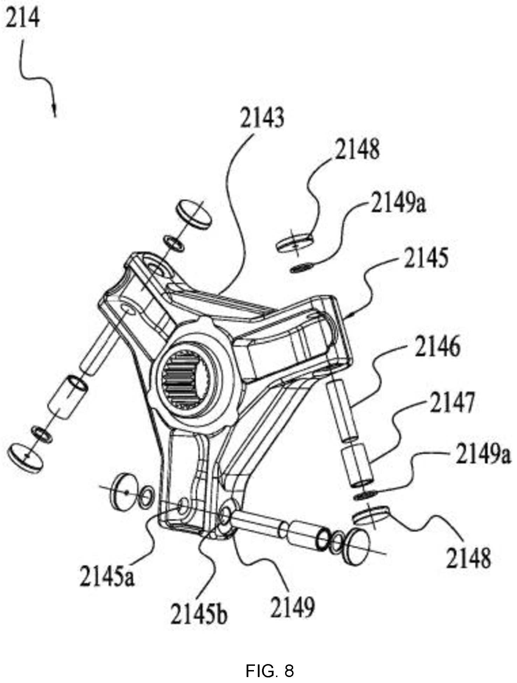

As shown in FIG. 8, in an optional embodiment, the thrust plate assembly 214 further includes a thrust plate roller shaft 2146, a thrust plate roller 2147, and a thrust plate slider 2148. The connecting end 2145 includes a first connecting hole 2145a and a second connecting hole 2145b. The thrust plate roller 2147 is at least partially disposed between the first connecting hole 2145a and the second connecting hole 2145b. The thrust plate roller shaft 2146 at least partially extend through the first connecting hole 2145a, the thrust plate roller 2147, and the second connecting hole 2145b. The thrust plate roller 2147 is connected to the thrust plate roller shaft 2146 in a clearance fit, that is, the thrust plate roller 2147 can rotate relative to the thrust plate roller shaft 2146. Further, slider-receiving portions 2149 are further defined on two sides of the connecting end 2145, and the slider-receiving portions 2149 on the two sides communicate with the first connecting hole 2145a and the second connecting hole 2145b respectively. The thrust plate slider 2148 is at least partially disposed in the slider-receiving portions 2149. When the thrust plate assembly 214 and the driving movable sheave assembly 213 are in a connected state, two ends of the thrust plate roller shaft 2146 abut against the thrust plate sliders 2148, respectively, and are positioned together with the connecting end 2145 in the sliding positioning groove 2135. The connecting end 2145 mates with the sliding positioning groove 2135 in a clearance fit, and therefore the connecting end 2145 can slide relative to the sliding positioning groove 2135. The thrust plate slider 2148 is at least partially disposed outside the slider-receiving portion 2149. When the connecting end 2145 slides in the sliding positioning groove 2135, the thrust plate slider 2148 can rub against an inner wall of the sliding positioning groove 2135. To further ensure stable connection of the thrust plate roller 2147 between the first connecting hole 2145a and the second connecting hole 2145b, an elastic gasket 2149a may further be disposed between the thrust plate roller 2147 and the first connecting hole 2145a and/or the second connecting hole 2145b, so that the thrust plate roller 2147 forms a certain amount of pre-load force along the axial direction of the first connecting hole 2145a. It should be noted that this arrangement can avoid direct friction between the thrust plate body 2143 and the sliding positioning groove 2135, and can allow replacement after wear occurs at a frictional contact portion, thereby improving the overall service life of the continuously variable transmission 200.

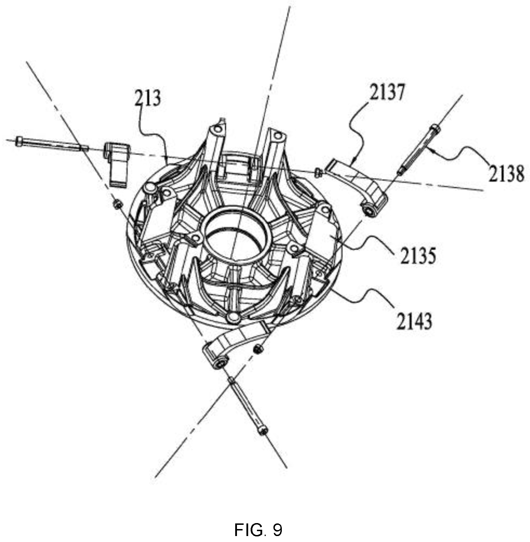

As shown in FIG. 9, in one optional embodiment, the driving movable sheave assembly 213 includes three sliding positioning grooves 2135, and correspondingly, the thrust plate assembly 214 is provided with three connecting ends 2145. It should be noted that, in order to ensure stability of the driving transmission mechanism 21 during rotation, the three sliding positioning grooves 2135 are uniformly distributed about the axis center of the driving movable sheave assembly 213 on the driving movable sheave assembly 213. Correspondingly, the connecting ends 2145 are also uniformly distributed about the axis center of the thrust plate assembly 214 on the thrust plate assembly 214. Selection of this number can simplify the internal structure of the continuously variable transmission 200 and reduce manufacturing cost as much as possible on the premise of ensuring stability of relative movement between the driving movable sheave assembly 213 and the thrust plate assembly 214.

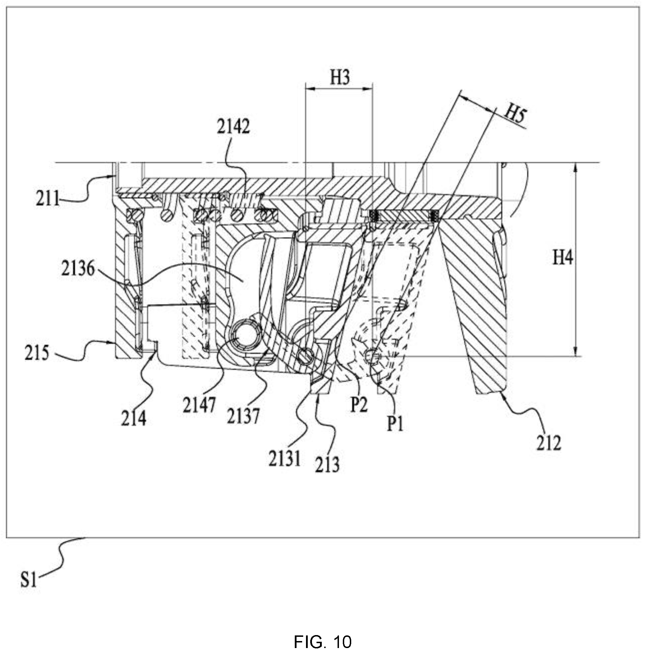

As shown in FIG. 10, an accommodating space 2136 is defined between the driving movable sheave assembly 213 and the thrust plate assembly 214. A centrifugal weight 2137 is disposed in the accommodating space 2136. One end of the centrifugal weight 2137 is rotatably connected to the driving movable sheave body 2131, and another end of the centrifugal weight 2137 abuts against the thrust plate assembly 214. When a rotational speed of the main shaft 211 is greater than a first threshold, the centrifugal weight 2137 rotates about a rotary connecting shaft 2138 under centrifugal force. Therefore, the centrifugal weight 2137 pushes the driving movable sheave assembly 213 away from the thrust plate assembly 214, that is, the driving movable sheave assembly 213 slides along the axis of the main shaft 211 toward the end close to the driving fixed sheave assembly 212. At this time, a relative distance between the driving movable sheave assembly 213 and the driving fixed sheave assembly 212 decreases, thereby pressing the drive belt 23, and a rotational diameter of the drive belt 23 between the driving fixed sheave assembly 212 and the driving movable sheave assembly 213 increases. It can be understood that, when the rotational speed of the main shaft 211 is less than or equal to the first threshold, the driving movable sheave assembly 213 returns to its original position under the acting force of the elastic member 2141. Optionally, the centrifugal weight 2137 is substantially disposed in the accommodating space 2136 of the sliding positioning groove 2135. One end of the centrifugal weight 2137 is rotatably connected to the driving movable sheave body 2131, and another end of the centrifugal weight 2137 abuts against the thrust plate roller 2147. When relative displacement occurs between the driving movable sheave assembly 213 and the driving fixed sheave assembly 212, relative rolling can occur between the thrust plate roller 2147 and the centrifugal weight 2137.

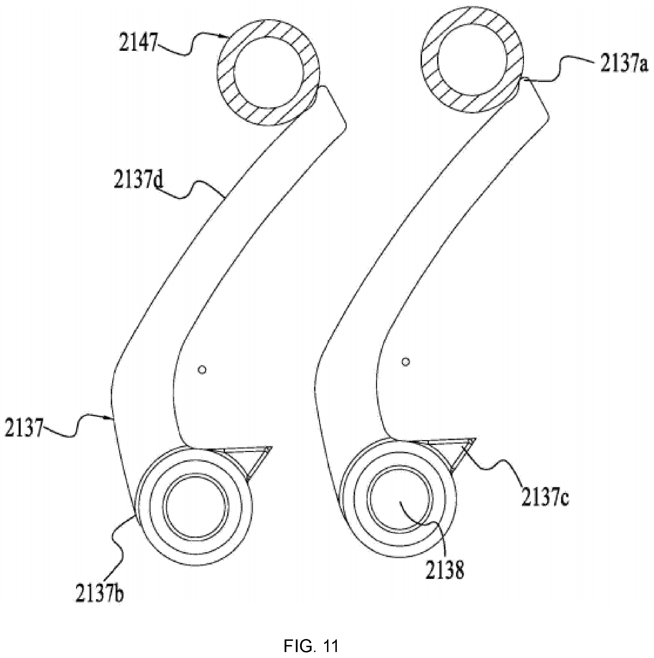

As shown in FIG. 10 and FIG. 11, the centrifugal weight 2137 includes an abutment portion 2137a, a centrifugal weight body 2137b, and a limiting portion 2137c. The abutment portion 2137a is disposed on the side of the centrifugal weight body 2137b close to the driving movable sheave body 2131, and the limiting portion 2137c is disposed at the end of the centrifugal weight body 2137b close to the thrust plate assembly 214. As described above, when a rotational speed of the main shaft 211 is less than or equal to the first threshold, relative rotation does not occur between the centrifugal weight 2137 and the driving movable sheave assembly 213. At this time, a position where the centrifugal weight 2137 is located is defined as a first position. When the centrifugal weight 2137 is at the first position, the abutment portion 2137a abuts against the driving movable sheave assembly 213. Therefore, the abutment portion 2137a can effectively limit an initial rotational position of the centrifugal weight 2137. The rotational speed of the main shaft 211 of the continuously variable transmission 200 provided by the present disclosure further defines a second threshold, and the rotational speed of the first threshold is greater than the second threshold. When the rotational speed of the main shaft 211 is equal to the second threshold, rotation between the centrifugal weight 2137 and the driving movable sheave assembly 213 reaches a maximum limit. At this time, a position where the centrifugal weight 2137 is located is defined as a second position. As described above, the end of the centrifugal weight 2137 provided with the limiting portion 2137c abuts against the thrust plate roller 2147. This arrangement enables rolling friction to be formed between the centrifugal weight 2137 and the thrust plate roller 2147 when the centrifugal weight 2137 moves relative to the thrust plate assembly 214. Compared with sliding friction between the centrifugal weight 2137 and the thrust plate assembly 214, the rolling friction has lower frictional resistance, so that operation of the centrifugal weight 2137 is smoother. Optionally, the centrifugal weight 2137 includes a rolling surface 2137d used to form rolling friction with the thrust plate roller 2147. When the rotational speed of the main shaft 211 changes between the first threshold and the second threshold, relative rotation occurs between the thrust plate roller 2147 and the rolling surface 2137d under centrifugal force. Optionally, when the rotational speed of the main shaft 211 gradually increases within the range between the first threshold and the second threshold, a relative position of the thrust plate roller 2147 on the rolling surface 2137d slides from the side close to the abutment portion 2137a to the side close to the limiting portion 2137c. When the rotational speed gradually decreases, the sliding direction is opposite. It should be noted that, whether the centrifugal weight 2137 is at the first position or the second position, the thrust plate roller 2147 is always in an abutment state with the rolling surface 2137d. When the centrifugal weight 2137 is positioned at the second position, the thrust plate roller 2147 is positioned on the side of the rolling surface 2137d closest to the limiting portion 2137c. During this movement process, a relative position of the centrifugal weight 2137 also moves with sliding of the driving movable sheave assembly 213. It should be noted that a distance between an axis of the rotary connecting shaft 2138 when the centrifugal weight 2137 is at the first position and an axis of the rotary connecting shaft 2138 when the centrifugal weight 2137 is at the second position is a maximum distance by which the driving movable sheave assembly 213 can slide relative to the main shaft 211. As described above, the positioning plate assembly 215 is fixedly connected to the driving movable sheave assembly 213, and the positioning plate assembly 215 can slide along the extension direction of the main shaft 211 together with the driving movable sheave assembly 213. Therefore, a distance between the positioning plate assembly 215 and the nut 217 in FIG. 4 is substantially consistent with the aforementioned maximum sliding distance of the main shaft 211. It can be understood that, when the centrifugal weight 2137 moves to the second position, the positioning plate assembly 215 abuts against the nut 217. For ease of description, in the present application, a distance along the axial direction of the main shaft 211 between the axis of the rotary connecting shaft 2138 when the centrifugal weight 2137 is at the first position and the axis of the rotary connecting shaft 2138 when the centrifugal weight 2137 is at the second position is defined as a maximum sliding distance H3. It should be noted that the distance between the positioning plate assembly 215 and the nut 217 is also the maximum sliding distance H3. In one optional embodiment, the maximum sliding distance H3 in the present disclosure is greater than or equal to 28 mm and less than or equal to 32 mm.

As shown in FIG. 10, a preset plane S1 is defined as a plane perpendicular to an axis of the rotary connecting shaft 2138. A projection of the axis of the rotary connecting shaft 2138 on the preset plane S1 along its own extension direction is defined as a rotational projection point P1. A projection of the axis of the main shaft 211 on the preset plane S1 along the axial direction of the rotary connecting shaft 2138 is defined as a driving projection line L1. In one optional embodiment, a distance between the rotational projection point P1 and the driving projection line L1 is defined as a distance H4, which is greater than or equal to 84 mm and less than or equal to 88 mm. The centrifugal weight 2137 further includes a center of mass P2. A distance between a projection of the center of mass P2 on the preset plane S1 along the axial direction of the rotary connecting shaft 2138 and the rotational projection point P1 is defined as a distance H5 which is greater than or equal to 15 mm and less than or equal to 18 mm. It should be noted that, the larger the distance between the center of mass P2 and the rotational projection point P1 and the larger the distance between the rotational projection point P1 and the axis of the main shaft 211 are, and the smaller the centrifugal force required for the centrifugal weight 2137 to move by the same distance. In this way, the centrifugal weight 2137 and the roller structure can respond more sensitively to centrifugal force generated by rotation of the main shaft 211. However, excessively long distance setting causes the centrifugal weight 2137 and the driving movable sheave assembly 213 to occupy an excessively large overall space, thereby increasing the size of the entire continuously variable transmission 200. Therefore, the above distances need to be controlled within reasonable ranges.

As described above, the centrifugal weight 2137 further includes the limiting portion 2137c disposed at its end. When the rotational speed of the main shaft 211 reaches the second threshold, the limiting portion 2137c abuts against the thrust plate roller 2147, thereby restricting a relative position between the limiting portion 2137c and the thrust plate roller 2147. A relative position at which the centrifugal weight 2137 abuts against the limiting portion 2137c is defined as a third position. As shown in FIG. 11, when the thrust plate roller 2147 is located at the third position relative to the centrifugal weight 2137, the limiting portion 2137c abuts against the thrust plate roller 2147, and the thrust plate roller 2147 does not contact the rolling surface 2137d. Therefore, it should be noted that, when the thrust plate roller 2147 is located at the third position relative to the centrifugal weight 2137, a main force-bearing point of the thrust plate roller 2147 stems from an abutment point between the thrust plate roller 2147 and the limiting portion 2137c. When the thrust plate roller 2147 is located at the second position relative to the centrifugal weight 2137, the main force on the thrust plate roller 2147 stems from support of the rolling surface 2137d for the thrust plate roller 2147. A straight line extending in a direction of a support force received by the thrust plate roller 2147 is defined as a preset straight line L2. In one optional embodiment, when the thrust plate roller 2147 is located at the second position relative to the centrifugal weight 2137, an angle defined between a projection of the preset straight line L2 on the preset plane S1 along the axial direction of the rotary connecting shaft 2138 and the driving projection line L1 is defined as an angle α1. When the thrust plate assembly 214 is located at the third position relative to the centrifugal weight 2137, an angle defined between a projection of the preset straight line L2 on the preset plane S1 along the axial direction of the rotary connecting shaft 2138 and the driving projection line L1 is defined as an angle α2. In one optional embodiment, a difference between α2 and α1 is greater than or equal to 15° and less than or equal to 35°. This arrangement can greatly reduce an axial component force of the centrifugal weight 2137 on the thrust plate roller 2147 along the extension direction of the driving projection line L1 when the thrust plate roller 2147 is located at the third position relative to the centrifugal weight 2137, which effectively reduces force between the thrust plate roller 2147 and the centrifugal weight 2137, and reduces impact between the thrust plate assembly 214 and the centrifugal weight 2137 when the rotational speed of the main shaft 211 reaches the second threshold.

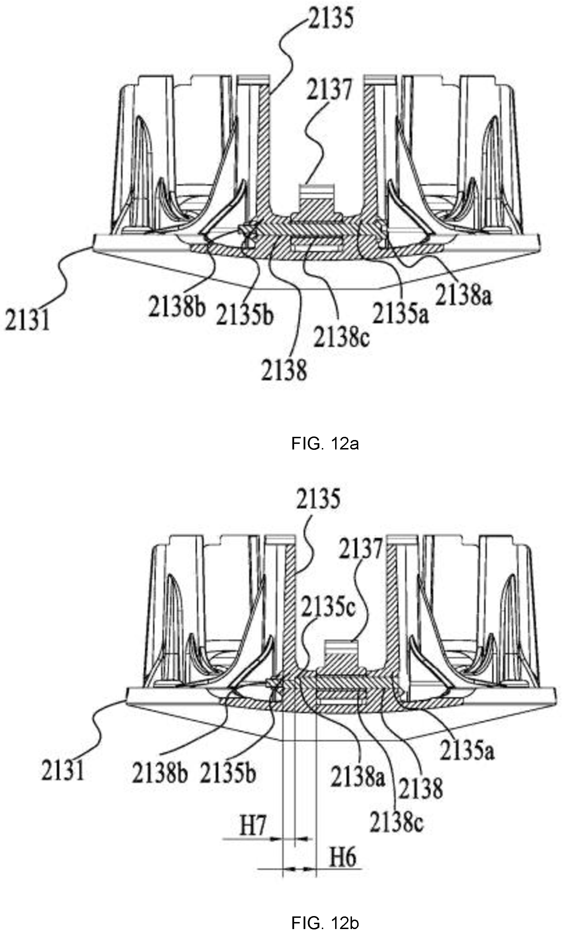

As shown in FIG. 9 and FIG. 12a, in one optional embodiment, the centrifugal weight 2137 is at least partially disposed in the sliding positioning groove 2135 and is rotatably connected to the driving movable sheave body 2131 through the rotary connecting shaft 2138. Optionally, the sliding positioning groove 2135 includes a first mounting portion 2135a and a second mounting portion 2135b. The rotary connecting shaft 2138 sequentially passes through the first mounting portion 2135a, the centrifugal weight 2137, and the second mounting portion 2135b. An abutment portion 2138a is formed on one end of the rotary connecting shaft 2138, and a connecting portion 2138b is formed on another end of the rotary connecting shaft 2138. Axial fixation of the rotary connecting shaft 2138 is implemented through the connecting portion 2138b and the abutment portion 2138a. In the present disclosure, the connecting portion 2138b is disposed as an external threaded structure, that is, the connecting portion 2138b implements fixed connection of the rotary connecting shaft 2138 through cooperation between a nut and the external thread. The abutment portion 2138a is disposed as a bolt head and is integrally formed with or fixedly connected to the rotary connecting shaft 2138. When the centrifugal weight 2137 is connected to the driving movable sheave body 2131 through the rotary connecting shaft 2138, the abutment portion 2138a abuts against the side of the first mounting portion 2135a away from the sliding positioning groove 2135, and the connecting portion 2138b abuts, through a nut, against the side of the second mounting portion 2135b away from the sliding positioning groove 2135. Further, a bushing 2138c is further disposed between the rotary connecting shaft 2138 and the centrifugal weight 2137. The centrifugal weight 2137 mates with the bushing 2138c in an interference fit, and the bushing 2138c mates with the rotary connecting shaft 2138 in a clearance fit. The rotary connecting shaft 2138 mates with the first mounting portion 2135a and the second mounting portion 2135b in a clearance fit respectively. This arrangement can make the rotatable connection between the centrifugal weight 2137 and the driving movable sheave body 2131 more flexible. An assembly direction of the rotary connecting shaft 2138 is from the first mounting portion 2135a toward the second mounting portion 2135b, and the rotational direction of the main shaft 211 is from the second mounting portion 2135b toward the first mounting portion 2135a. It should be noted that the rotational direction here refers to the forward rotation direction of the main shaft 211. It should be noted that, for ease of description, in the present disclosure, the side of the second mounting portion 2135b located on the side of the abutment surface 2135c facing or close to the first mounting portion 2135a is defined as a first side of the abutment surface 2135c, and the side of the second mounting portion 2135b located on the side of the abutment surface 2135c away from the first mounting portion 2135a is defined as a second side of the abutment surface 2135c.

As shown in FIG. 12b, in another optional embodiment, the rotary connecting shaft 2138 also includes a connecting portion 2138b and an abutment portion 2138a. In this embodiment, the connecting portion 2138b is disposed close to the abutment portion 2138a. Optionally, an abutment surface 2135c facing the first mounting portion 2135a is formed in the second mounting portion 2135b. It should be noted that, an inner surface of the second mounting portion 2135b that contacts the rotary connecting shaft 2138 has a diameter on the first side of the abutment surface 2135c greater than a diameter on a side away from the first mounting portion 2135a. When the rotary connecting shaft 2138 and the driving movable sheave body 2131 are in a connected state, the abutment portion 2138a abuts against the abutment surface 2135c, and the end of the rotary connecting shaft 2138 positioned on the second side of the abutment surface 2135c implements fixed connection of the rotary connecting shaft 2138 through the connecting portion 2138b. Optionally, the connecting portion 2138b may be an external thread and implement fastened connection of the rotary connecting shaft 2138 through a nut. That is, in this embodiment, the rotary connecting shaft 2138 is axially positioned by the connecting portion 2138b and by abutment between the abutment portion 2138a and the abutment surface 2135c. Further, the rotary connecting shaft 2138 mates with the first mounting portion 2135a in a clearance fit, the second mounting portion 2135b on the second side of the abutment surface 2135c mates with the rotary connecting shaft 2138 in a clearance fit, and the second mounting portion 2135b on the first side of the abutment surface 2135c mates with the rotary connecting shaft 2138 in an interference fit.

In one embodiment, a distance between the connecting portion 2138b and the abutment portion 2138a is relatively small. It should be noted that, in this embodiment, the distance between the connecting portion 2138b and the abutment portion 2138a is less than an axial contact length between the second mounting portion 2135b and the rotary connecting shaft 2138. This arrangement can effectively reduce a length of axial fixation between the rotary connecting shaft 2138 and the driving movable sheave body 2131 along the axial direction of the rotary connecting shaft 2138, so that axial fixation only needs to be implemented within the second mounting portion 2135b, thereby reducing assembly error. Further, this arrangement enables the abutment portion 2138a and the connecting portion 2138b to be substantially located on the same side of the rotary connecting shaft 2138, and can effectively improve surface roughness of the rotary connecting shaft 2138 during manufacturing.

An axial length of surface contact between the second mounting portion 2135b and the rotary connecting shaft 2138 along the axial direction of the rotary connecting shaft 2138 is defined as a connection length H6. An axial length of surface contact between the second mounting portion 2135b and the rotary connecting shaft 2138 on the second side of the abutment surface 2135c is defined as a fixing length H7. A ratio of the fixing length H7 to the connection length H6 is greater than or equal to 0.6 and less than or equal to 0.75. This arrangement can effectively ensure effective connection strength between the rotary connecting shaft 2138 and the second mounting portion 2135b, avoid insufficient axial fixation strength caused by an excessively short axial length of interference fit between the rotary connecting shaft 2138 and the second mounting portion 2135b, and also avoid increased assembly difficulty of the second mounting portion 2135b caused by an excessively long axial length of interference fit.

As described above, when the all-terrain vehicle 100 is in a forward-traveling condition, rotation of the crankshaft 1311 drives the main shaft 211 to rotate. Centrifugal force generated during rotation of the main shaft 211 drives the driving movable sheave assembly 213 to move toward the driving fixed sheave assembly 212, thereby clamping the drive belt 23. As a result, the driving transmission mechanism 21 transmits a driving force to the driven transmission mechanism 22 through the drive belt 23. And the driven transmission mechanism 22 further transmits the driving force to the traveling assembly 14 through the transmission assembly 15. The above operating state of the engine 131 is referred to as an accelerating state of the engine 131. In addition, the engine 131 further includes an idling state. When the engine 131 is started and no throttle operation is performed on the all-terrain vehicle 100, the engine 131 is in the idling state. When the engine 131 is in the idling state, the crankshaft 1311 and the main shaft 211 rotate in the forward rotation direction at a relatively low rotation speed, which is insufficient to generate enough centrifugal force for the thrust plate assembly 214 to drive the driving movable sheave assembly 213 to slide toward the driving fixed sheave assembly 212. That is, at this time, the drive belt 23 is located on the main shaft 211. As described above, the bearing 2111 is disposed between the drive belt 23 and the main shaft 211, and the bearing 2111 is a bidirectional bearing. Therefore, it should be noted that, when the vehicle is in the idling state, the driving transmission mechanism 21 and the driven transmission mechanism 22 do not transmit driving force to each other. Further, when the all-terrain vehicle 100 is in a downhill condition and the vehicle is in the idling condition, it should be noted that the all-terrain vehicle 100 will continuously accelerate under its own gravity. That is, the traveling members 14 transmit a driving force to the driven transmission mechanism 22 through the transmission assembly 15. Because the drive belt 23 is located on the main shaft 211 at this time, the driven transmission mechanism 22 cannot transmit the driving force to the driving transmission mechanism 21. In this case, when the all-terrain vehicle 100 is in the downhill condition, the traveling members 14 drive the transmission assembly 15 and the driven transmission mechanism 22 to idle, and the speed gradually increases.

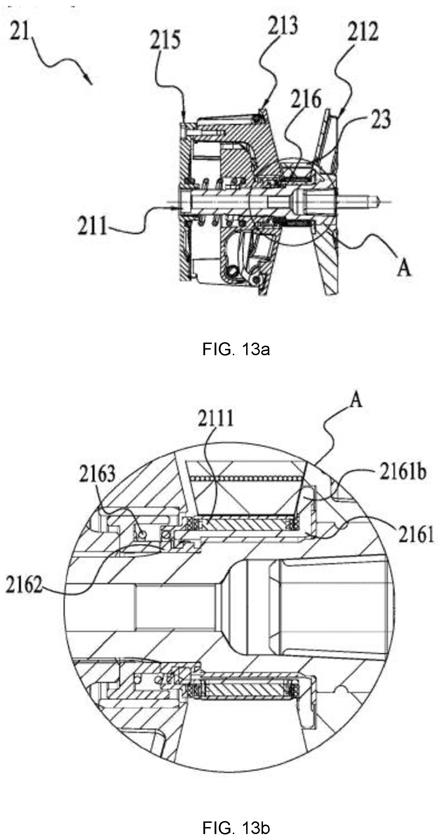

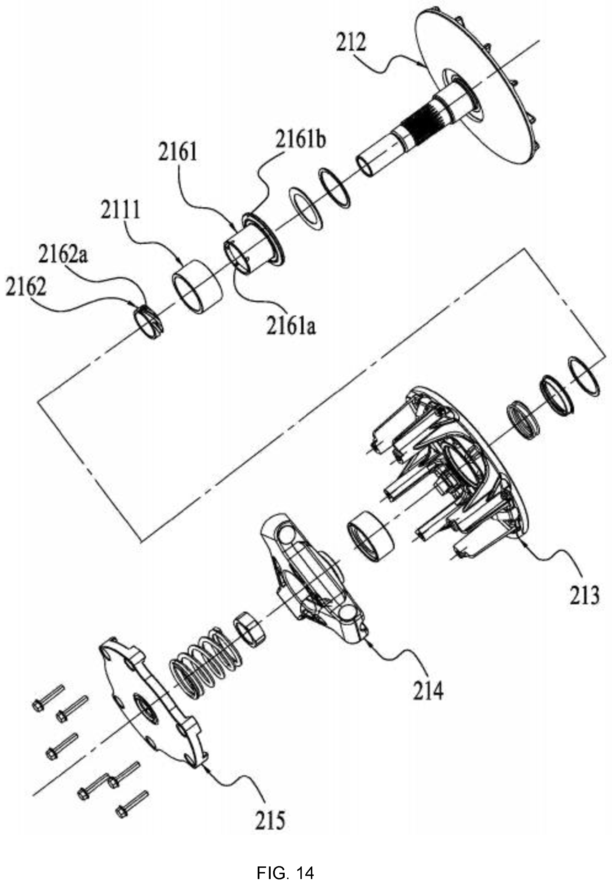

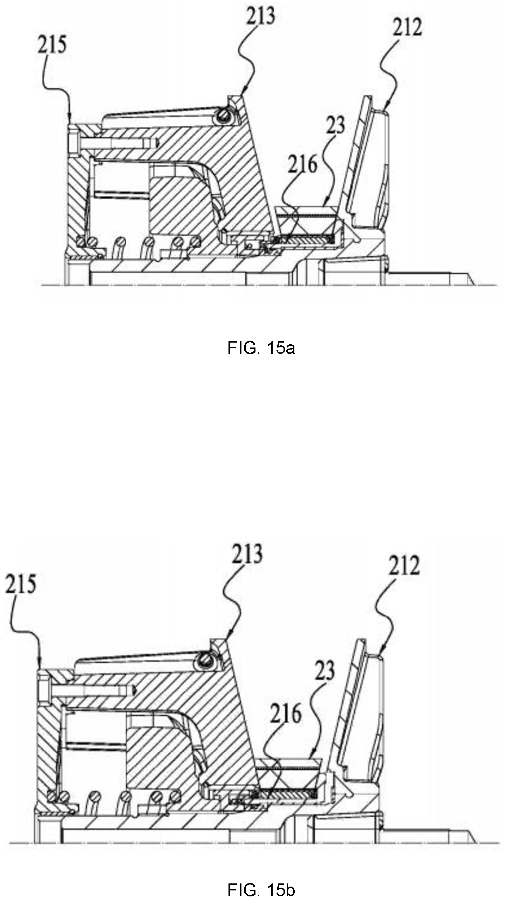

Based on this, as shown in FIGS. 13a, 13b, and FIG. 14, in one optional embodiment, the driving transmission mechanism 21 further includes a a braking assembly 216 disposed on the main shaft 211, and the braking assembly 216 is substantially disposed between the drive belt 23 and the main shaft 211. Optionally, the braking assembly 216 includes a sliding member 2161 and a positioning member 2162. The sliding member 2161 is disposed between the bearing 2111 and the main shaft 211, and the sliding member 2161 is connected to the main shaft 211 in a non-transmission mode. The sliding member 2161 is connected to the bearing 2111 in a transmission mode. It should be noted that the sliding member 2161 may mates with the main shaft 211 in a clearance fit, that is, when the sliding member 2161 rotates, the main shaft 211 does not synchronously rotate with the sliding member 2161. Further, the positioning member 2162 is disposed between the sliding member 2161 and the main shaft 211. The positioning member 2162 is disposed on the main shaft 211 and fixedly connected to the main shaft 211. Further, a positioning groove 2162a is defined on the positioning member 2162. Correspondingly, a protrusion 2161a is disposed on the sliding member 2161. When the sliding member 2161 and the positioning member 2162 are respectively in an assembled state with the main shaft 211, the sliding member 2161 and the positioning member 2162 cooperate with each other, and at this time, the protrusion 2161a is at least partially positioned in the positioning groove 2162a. As shown in FIG. 15a and FIG. 15b, the positioning groove 2162a is arranged such that, when the sliding member 2161 rotates relative to the positioning member 2162, the sliding member 2161 can rotate relative to the positioning member 2162 in a preset direction and can also slide relative to the positioning member 2162 toward the side close to the driving movable sheave assembly 213 along the axial extension direction of the main shaft 211.

As shown in FIGS. 13a, 13b, and FIG. 14, a pushing portion 2161b is further disposed on the side of the sliding member 2161 away from the driving movable sheave assembly 213. The pushing portion 2161b is at least partially located on one side of the drive belt 23. When the sliding member 2161 rotates relative to the positioning member 2162 in the preset direction, the sliding member 2161 simultaneously generates relative displacement toward the side close to the driving movable sheave assembly 213. During this process, the pushing portion 2161b drives the drive belt 23 to move toward the side close to the driving movable sheave assembly 213 until the drive belt 23 abuts against the driving movable sheave, so that the drive belt 23 and the driving movable sheave assembly 213 can transmit driving force to each other. Optionally, an elastic member 2163 is further disposed between the driving movable sheave assembly 213 and the sliding member 2161, so as to facilitate applying a pre-load force to the sliding member 2161 in a direction away from the driving movable sheave assembly 213, and to facilitate returning of the sliding member 2161 to a position close to the driving fixed sheave assembly 212 when the sliding member 2161 is not subjected to a rotational driving force in the preset direction. It should be noted that the rotational driving force of the sliding member 2161 along the preset direction stems from driving of the drive belt 23. Therefore, the drive belt 23 needs to transmit a driving force to the sliding member 2161 in the preset direction. For this purpose, in this embodiment, the bearing 2111 is configured as a unidirectional bearing. That is, when the drive belt 23 rotates in a preset direction, the drive belt 23 can transmit a driving force to the sliding member 2161 through the bearing 2111; when the drive belt 23 rotates in a direction opposite to the preset direction, the drive belt 23 cannot transmit a driving force to the sliding member 2161. The preset direction is the reverse rotation direction of the main shaft 211. That is, when the drive belt 23 rotates in the forward rotation direction, or when the main shaft 211 rotates in the forward rotation direction and its rotational speed is less than the first threshold, no driving force is transmitted between the drive belt 23 and the sliding member 2161. When the drive belt 23 or the main shaft 211 rotates in the reverse rotation direction, driving force can be transmitted between the drive belt 23 and the sliding member 2161.

In one embodiment, when the all-terrain vehicle 100 is in a downhill condition, the traveling assembly 14 transmits a driving force to the driven transmission mechanism 22 through the transmission assembly 15. At this time, reverse rotation of the driven transmission mechanism 22 drives the drive belt 23 to rotate in the reverse rotation direction. Driven by the bearing 2111 configured as a unidirectional bearing, the drive belt 23 drives the sliding member 2161 to rotate and, at the same time, slide toward the driving movable sheave assembly 213, and drives the drive belt 23 to abut against the driving movable sheave assembly 213. Thus, the driving force is reversely transmitted to the crankshaft 1311 through the main shaft 211 by means of the driving movable sheave assembly 213. In this way, when the all-terrain vehicle 100 travels downhill, potential energy generated under gravity is transmitted to the engine 131 through the foregoing series of transmission components, and the rotation speed is effectively controlled by internal components of the engine 131, thereby reducing the rotation speed of the traveling members 14 under the downhill condition and implementing a smooth downhill function. In the present disclosure, an operating state in which the driving force of the traveling members 14 is reversely transmitted to the engine 131 through the continuously variable transmission 200 is referred to as a engine-braking state. It should be explained that the "axis of the thrust plate assembly 214", the "axis of the positioning plate assembly 215", the "axis of the driving movable sheave assembly 213", and the "axis of the driving fixed sheave assembly 212" appearing above are substantially located on the same straight line as the axis of the main shaft 211. If minor differences exist between the axes due to manufacturing errors or tolerances, such differences shall fall within the protection scope of the present application.

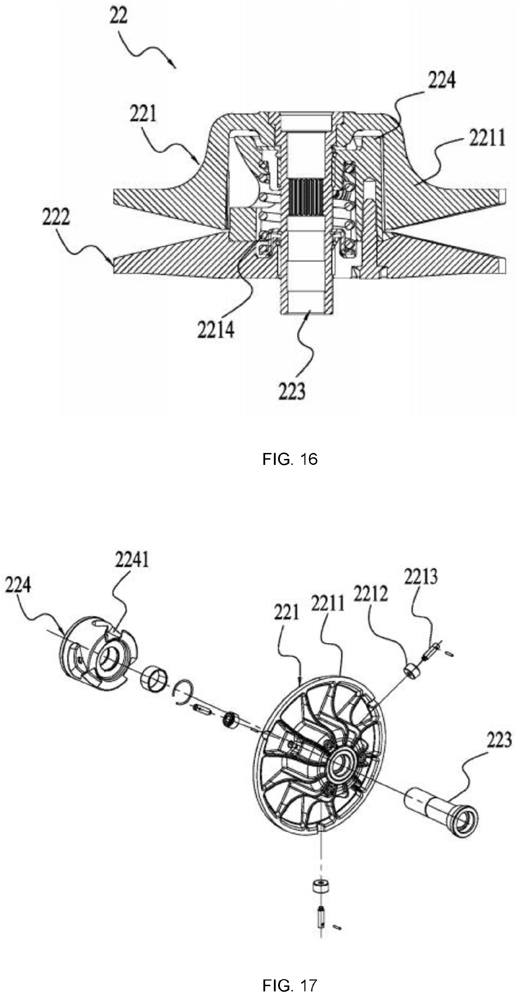

As shown in FIG. 16, the continuously variable transmission 200 provided by the present application further includes a driven transmission mechanism 22. The driven transmission mechanism 22 includes a driven fixed sheave assembly 221, a driven movable sheave assembly 222, and a driven shaft 223. The driven fixed sheave assembly 221 is fixedly connected to the driven shaft 223. The driven movable sheave assembly 222 is connected to the driven shaft 223 in a clearance fit. That is, the driven movable sheave assembly 222 can not only slide relative to the driven shaft 223 along an axial direction of the driven shaft 223, but also rotate relative to the driven shaft 223 within a certain range. The driven movable sheave assembly 222 is connected to the driven fixed sheave assembly 221 in a transmission mode. That is, the driven movable sheave assembly 222 can move relative to the driven fixed sheave assembly 221 along an axial extension direction of the driven shaft 223, and rotational driving force of the driven fixed sheave assembly 221 about the axis of the driven shaft 223 can also be synchronously transmitted to the driven movable sheave assembly 222. Optionally, the driven transmission mechanism 22 further includes a ramp hub assembly 224. When viewed along the axial direction of the driven shaft 223, the ramp hub assembly 224 is disposed between the driven fixed sheave assembly 221 and the driven movable sheave assembly 222. Further, when viewed in a radial direction of the driven shaft 223, the ramp hub assembly 224 is at least partially disposed between the driven fixed sheave assembly 221 and the driven shaft 223. The ramp hub assembly 224 is fixedly connected to the driven movable sheave assembly 222, that is, the ramp hub assembly 224 can synchronously slide with the driven movable sheave assembly 222.

As shown in FIG. 16 and FIG. 17, in one optional embodiment, the driven shaft 223 at least partially extends through the ramp hub assembly 224, and a sliding groove 2241 is defined on an outer peripheral surface of the ramp hub assembly 224. Correspondingly, the driven fixed sheave assembly 221 further includes a driven fixed sheave body 2211 and a driven roller 2212. The driven roller 2212 is rotatably connected to the driven fixed sheave body 2211. The driven roller 2212 is substantially disposed in the sliding groove 2241 and can rotate or move relative to the sliding groove 2241. When the driven roller 2212 is located in the sliding groove 2241, the driven roller 2212 is at least partially located between the ramp hub assembly 224 and the driven fixed sheave body 2211.

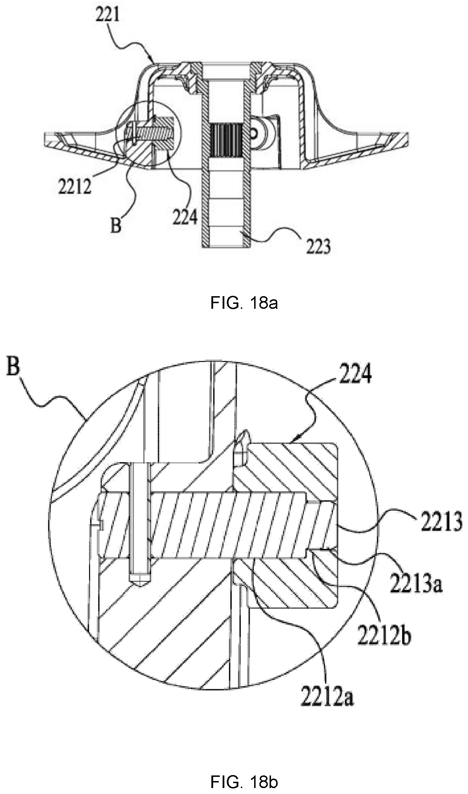

As shown in FIG. 16 to FIG. 18, the driven roller 2212 and the driven fixed sheave body 2211 are rotatably connected through a roller shaft 2213. The roller shaft 2213 at least partially extends through the driven fixed sheave body 2211 and is fixedly connected to the driven fixed sheave body 2211. The driven roller 2212 further defines a roller hole 2212a. The roller shaft 2213 further at least partially extends through the roller hole 2212a and mates with the driven roller 2212 in a clearance fit. Further, an annular boss 2212b is disposed inside the roller hole 2212a. Correspondingly, an annular groove 2213a is disposed on an outer surface of the roller shaft 2213 that contacts the roller hole 2212a. When the roller shaft 2213 and the driven roller 2212 are in a mounted state, the annular boss 2212b is substantially located inside the annular groove 2213a and abuts against the end of the annular groove 2213a close to the driven shaft 223. The roller shaft 2213 implements limiting with the annular groove 2213a in the radial direction of the driven shaft 223 through the above abutment. Further, the driven roller 2212 is made of an elastic material, and the roller shaft 2213 is made of a rigid material. In the present disclosure, the roller shaft 2213 is made of a metal material. Therefore, when assembling the driven roller 2212 and the roller shaft 2213, it is only necessary to press the driven roller 2212 into the roller shaft 2213 along the axial extension direction of the roller shaft 2213 until the annular boss 2212b enters the annular groove 2213a through elastic deformation of the driven roller 2212 itself, so that assembly between the roller shaft 2213 and the driven roller 2212 can be implemented. This assembly manner can implement effective rotational connection between the driven roller 2212 and the roller shaft 2213 without providing a gasket, thereby reducing the number of components and simplifying the assembly process.

The sliding groove 2241 is arranged such that the driven roller 2212 can roll to different positions in the sliding groove 2241. As the driven roller 2212 rolls to different positions in the sliding groove 2241, relative movement between the sliding groove 2241 and the driven roller 2212 causes the driven movable sheave assembly 222 to slide to different positions relative to the driven fixed sheave assembly 221. During operation of the continuously variable transmission 200, as the rotational speed of the crankshaft 1311 gradually becomes greater than the first threshold and continues to increase, centrifugal force generated by the centrifugal weight 2137 increases, causing the driving movable sheave assembly 213 to slide toward the driving fixed sheave assembly 212. That is, the driving movable sheave assembly 213 and the driving fixed sheave assembly 221 move toward each other, and at this time, a transmission radius of the drive belt 23 increases. However, when an overall length of the drive belt 23 remains unchanged, the driven transmission mechanism 22 needs to correspondingly reduce the transmission radius of the drive belt 23. Because the drive belt 23 has a certain rigidity, at this time the drive belt 23 can apply, in the driven transmission mechanism 22, an acting force to the driven movable assembly 222 toward the side away from the driven fixed sheave assembly 221, so that the driven movable sheave assembly 222 slides toward the side away from the driven fixed sheave assembly 221.

Correspondingly, when the rotational speed of the crankshaft 1311 gradually decreases within a range from the second threshold to the first threshold, centrifugal force generated by the centrifugal weight 2137 gradually decreases, and during this process the driving movable sheave assembly 213 slides toward the side away from the driving fixed sheave assembly 212, thereby reducing the transmission radius of the drive belt 23. Similarly, when the length remains unchanged, the driven movable sheave assembly 222 should correspondingly slide toward the side close to the driven fixed sheave assembly 221, so as to increase the transmission radius of the drive belt 23 in the driven transmission mechanism 22. In one optional embodiment, an elastic member 2214 is disposed between the ramp hub assembly 224 and the driven fixed sheave assembly 221. One end of the elastic member 2214 abuts against the ramp hub assembly 224, and another end of the elastic member 2214 abuts against the driven fixed sheave assembly 221. Because the ramp hub assembly 224 is fixedly connected to the driven movable sheave assembly 222, the elastic member 2214 can provide, inside the driven transmission mechanism 22, a pre-load force to make the driven movable sheave assembly 222 and the driven fixed sheave assembly 221 move toward each other. Therefore, when the driven movable sheave assembly 222 and the driven fixed sheave assembly 221 are in a mutually separated state under the acting force of the drive belt 23, the elastic member 2214 always provides, to the driven movable sheave assembly 222, an acting force in a direction close to the driven fixed sheave assembly 221 during this process. Under this arrangement, when the drive belt 23 reduces its transmission radius in the driving transmission mechanism 21, the driven movable sheave assembly 222 and the driven fixed sheave assembly 221 of the driven transmission mechanism 22 can move toward each other under the action of the elastic member 2214, thereby avoiding a situation in which a transmission radius of the driven transmission mechanism 22 cannot respond to transmission demand of the driving transmission mechanism 21, causing looseness of the drive belt 23 and further causing transmission failure.

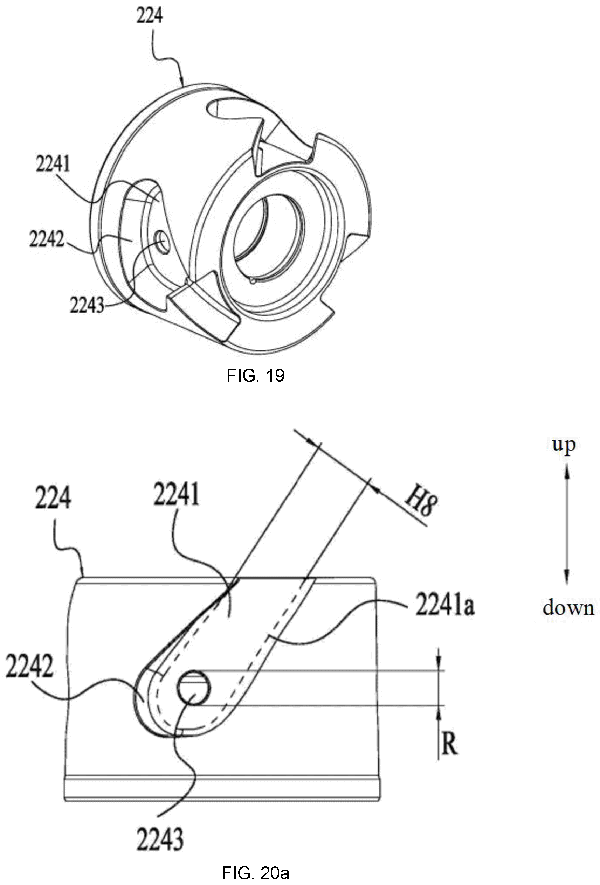

As shown in FIG. 19, the sliding groove 2241 is arranged as an inwardly recessed accommodating space. The sliding groove 2241 is recessed inward on the basis of an original wall thickness of the ramp hub assembly 224. That is, a wall thickness at the sliding groove 2241 is far smaller than the wall thickness of the ramp hub assembly 224, and a wall-thickness difference between the sliding groove 2241 and the ramp hub assembly 224 forms a limiting surface 2242 of the sliding groove 2241. The limiting surface 2242 is used to limit a movement trajectory of the driven roller 2212 in the sliding groove 2241. It should be noted here that the "wall thickness" described in the present application refers to a radial thickness of the ramp hub assembly 224 and a radial thickness at the sliding groove 2241. In the present disclosure, the wall thickness at the sliding groove 2241 is greater than or equal to 2.5 mm and less than or equal to 3.5 mm. Selection of this wall-thickness range can effectively ensure operation strength of the sliding groove 2241 and can also effectively reduce the weight of the ramp hub assembly 224 as much as possible, thereby simplifying the structure. Further, in order to effectively reduce heat generated by friction during movement of the driven roller 2212 in the sliding groove 2241 and avoid overheating failure of the driven roller 2212, a heat dissipation hole 2243 is defined in the sliding groove 2241 for heat dissipation. The heat dissipation hole 2243 is used to further transfer heat generated during operation of the driven roller 2212 and the sliding groove 2241 through the driven shaft 223 to other parts of the driven transmission mechanism 22, thereby effectively improving operating efficiency of the continuously variable transmission 200.

As shown in FIG. 20a, a minimum width of the sliding groove 2241 is defined as a groove width H8. A diameter R of the heat dissipation hole 2243 needs to satisfy that a ratio of the groove width H8 to the diameter R of the heat dissipation hole 2243 is greater than or equal to 1.2 and less than or equal to 2.4. Only when the diameter of the heat dissipation hole 2243 is set within a suitable range can the sliding groove 2241 have sufficient strength, thereby avoiding cracking or failure of the sliding groove 2241. Further, the heat dissipation hole 2243 should be disposed at a middle portion of the sliding groove 2241. That is, the heat dissipation hole 2243 should not be disposed on any limiting surface 2242 of the sliding groove 2241. Optionally, a distance between the heat dissipation hole 2243 and any limiting surface 2242 of the sliding groove 2241 should be greater than or equal to 2 mm. A movement range of the driven roller 2212 in the sliding groove 2241 is defined as a sliding region 2241a. It should be noted that, only when a diameter of the driven roller 2212 is less than or equal to the groove width H8 can the driven roller 2212 move in the sliding region 2241a. In order to ensure smooth movement of the driven roller 2212, in the present disclosure, the diameter of the driven roller 2212 is less than the groove width H8. For ease of description, up (upper) and down (lower) directions of the sliding groove 2241 are further defined in the drawing. Optionally, the side of the sliding groove 2241 extending along the axis of the driven shaft 223 and facing the driven fixed sheave assembly 221 is defined as an upper side of the sliding groove 2241, and the side of the sliding groove 2241 extending along the axis of the driven shaft 223 and facing the driven movable sheave assembly 222 is defined as a lower side of the sliding groove 2241. The driven roller 2212 can move up and down in the sliding groove 2241. It should be noted that, when the transmission diameter of the drive belt 23 in the driving transmission mechanism 21 changes from small to large, the transmission diameter of the drive belt 23 in the driven transmission mechanism 22 changes from large to small. At this time, a distance between the driven movable sheave assembly 222 and the driven fixed sheave assembly 221 increases, and the driven roller 2212 moves in the sliding groove 2241 from the lower side to the upper side of the sliding groove 2241. At this time, the corresponding operating condition is generally an acceleration stage of the all-terrain vehicle 100. Conversely, the driven roller 2212 moves in the sliding groove 2241 from the upper side of the sliding groove 2241 to the lower side, and the corresponding operating condition is generally a deceleration stage of the all-terrain vehicle 100. It should be noted that, as long as the transmission diameter of the drive belt 23 in the driving transmission mechanism 21 changes correspondingly, the driven roller 2212 will be caused to freely move up and down in the sliding region 2241a of the sliding groove 2241.

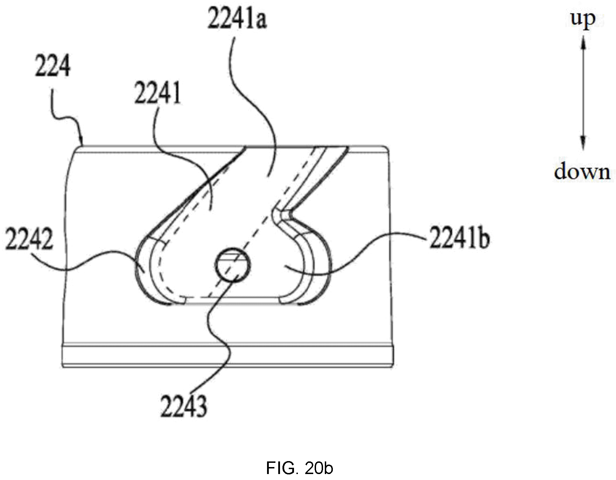

As shown in FIG. 20b, in another optional embodiment, the sliding groove 2241 further includes a braking region 2241b. The braking region 2241b is substantially disposed at the lowermost portion of the sliding groove 2241 and communicates with the sliding region 2241a. Different from the sliding region 2241a, when the driven roller 2212 is located in the braking region 2241b, the driven roller 2212 substantially cannot move in an upper-lower direction of the sliding groove 2241. The sliding region 2241a and the braking region 2241b are distributed on an outer surface of the ramp hub assembly 224 and are substantially circumferentially distributed. Optionally, a distribution direction of the sliding region 2241a and the braking region 2241b on the ramp hub assembly 224 is substantially consistent with a rotational direction when the driven shaft 223 rotates in the forward rotation direction. That is, the forward rotation direction of the driven shaft 223 is from the sliding region 2241a toward the braking region 2241b. This arrangement enables the driven roller 2212 to be substantially located in the sliding region 2241a of the sliding groove 2241 when the driven shaft 223 rotates in the forward rotation direction. Only when the driven shaft 223 rotates in the reverse rotational direction does the driven roller 2212 enter the braking region 2241b and restrict movement of the driven roller 2212 along the upper-lower direction of the sliding groove 2241. That is, when the driven shaft 223 rotates in the reverse rotation direction, the driven fixed sheave assembly 221 and the driven movable sheave assembly 222 cannot slide relative to each other. Therefore, when the all-terrain vehicle 100 is in the engine-braking state, the driven transmission mechanism 22 allows the drive belt 23 to transmit driving force to the driving transmission mechanism 21 at a relatively constant transmission diameter. It should be noted here that the forward rotation direction of the driven shaft 223 is substantially consistent with the forward rotation direction of the main shaft 211, and likewise, conversely, the reverse rotation direction of the main shaft 211 is also the reverse rotation direction of the driven shaft 223. It can be noted that, in order to ensure that the driven transmission mechanism 22 can stably transmit driving force to the driving transmission mechanism 21, when the ramp hub assembly 224 is located in the braking region 2241b, the driven fixed sheave assembly 221 and the driven movable sheave assembly 222 substantially do not slide relative to each other along the axial direction of the driven shaft 223. That is, a relative distance between the driven fixed sheave assembly 221 and the driven movable sheave assembly 222 substantially does not change, so as to ensure effective transmission of the driving force on the drive belt 23. Since the ramp hub assembly 224 and the driven movable sheave assembly 222 is slidably connected to the driven shaft 223, both can rotate relative to the driven shaft 223 within a certain circumferential angle range. Therefore, in the present disclosure, a slidable connection between the ramp hub assembly 224 and the driven shaft 223 is implemented by a self-lubricating bearing and a wire retaining ring, and the driven movable sheave assembly 222 and the driven shaft 223 are also connected in the same manner. The connection manner between the positioning plate assembly 215 and the main shaft 211 has been described in detail above. The connection manners and connection members 2144 between the ramp hub assembly 224 and the driven shaft 223, and between the driven movable sheave assembly 222 and the driven shaft 223 are substantially identical to that between the positioning plate assembly 215 and the main shaft 211. Therefore, further details will not be described in detail here.

As shown in FIG. 4, in one optional embodiment, the driving fixed sheave assembly 212 and the driven movable sheave assembly 222 are disposed on the same side of the drive belt 23, and the driving movable sheave assembly 213 and the driven fixed sheave assembly 221 are disposed on the same side of the drive belt 23. This arrangement enables the continuously variable transmission 200 to properly generate a clamping force on the drive belt 23 during movement and properly transmit torque.

In the present application, the driven fixed sheave assembly 221 and the driven shaft 223 are connected by bolts to form an integral driving-force transmission system. The driven movable sheave assembly 222 and the ramp hub assembly 224 are fixedly connected by pins or bolts. The roller shaft 2213 and the driven fixed sheave assembly 221 are also fixedly connected by pins or bolts. It should be noted that, in other embodiments, other manners may also be used to implement fastened connection therebetween, as long as driving force can be transmitted therebetween, and such manners shall fall within the protection scope of the present application.

It should be understood that the specific embodiments described herein are merely used to explain the present application and are not intended to limit the present application. Based on the embodiments provided by the present application, all other embodiments obtained by workers skilled in the art without creative effort shall fall within the protection scope of the present application.

Obviously, the drawings are merely some examples or embodiments of the present application. For workers skilled in the art, the present application may also be applied to other similar situations based on these drawings without creative effort. In addition, it can be understood that, although work performed in the course of development may be complicated and lengthy, certain changes in design, manufacture, or production made by workers skilled in the art based on the technical contents disclosed in the present application are only conventional technical means and shall not be regarded as insufficiency of the disclosure of the present application.

The embodiments described above merely express several embodiments of the present application. Although the descriptions are relatively specific and detailed, they shall not be construed as limiting the patent protection scope. It should be noted that workers skilled in the art may make various modifications and improvements without departing from the concept of the present application, and these modifications and improvements shall fall within the protection scope of the present application. Therefore, the protection scope of the present application shall be subject to the appended claims.

## Claims

1. A continuously variable transmission comprising:
a driving transmission mechanism;
a driven transmission mechanism, the driven transmission mechanism being connected to the driving transmission mechanism in a transmission mode; and
a drive belt, the drive belt being connected to the driven transmission mechanism and the driving transmission mechanism in a transmission mode, respectively to transmit a driving force between the driven transmission mechanism and the driving transmission mechanism;
wherein the driving transmission mechanism comprises:
a main shaft;
a driving movable sheave assembly, the driving movable sheave assembly being sleeved on the main shaft and the driving movable sheave assembly mating with the main shaft in a clearance fit, the driving movable sheave assembly further comprising a driving movable sheave body and a centrifugal weight, the centrifugal weight being rotatably connected to the driving movable sheave body;
a driving fixed sheave assembly, the driving fixed sheave assembly being fixedly connected to the main shaft;
a positioning plate assembly mating with the main shaft in a clearance fit, the positioning plate assembly is disposed on a side of a thrust plate assembly away from the driving movable sheave assembly and the positioning plate assembly is fixedly connected to the driving movable sheave assembly; and
a thrust plate assembly, the thrust plate assembly further comprising an elastic member and a thrust plate body, the thrust plate body being fixedly connected to the main shaft, the elastic member being disposed between the positioning plate assembly and the thrust plate body, and the elastic member being capable of applying a pre-load force to make the driving movable sheave assembly move away from the driving fixed sheave assembly; and
the driven transmission mechanism comprises:
a driven shaft;
a driven movable sheave assembly, the driven movable sheave assembly mating with the driven shaft in a clearance fit;
a driven fixed sheave assembly, the driven fixed sheave assembly being fixedly connected to the driven shaft, and the driven fixed sheave assembly further comprising a driven roller; and
a ramp hub assembly, the ramp hub assembly being at least partially disposed between the driven movable sheave assembly and the driven fixed sheave assembly, the ramp hub assembly being fixedly connected to the driven movable sheave assembly, the ramp hub assembly abutting against the driven fixed sheave assembly by the driven roller, and the ramp hub assembly and the driven movable sheave assembly being capable of synchronously sliding along an axial of the driven shaft under pressing of the drive belt; and an elastic member being further disposed between the driven fixed sheave assembly and the ramp hub assembly, and is capable of applying a pre-load force to make the driven fixed sheave assembly and the ramp hub assembly move toward each other.

2. The continuously variable transmission according to claim 1, wherein the thrust plate assembly comprises a thrust plate body and a connecting portion, the connecting portion is connected to the main shaft by a spline, and the thrust plate body is integrally formed with the connecting portion.

3. The continuously variable transmission according to claim 2, wherein the driving transmission mechanism further comprises a nut, the nut is threadedly connected to the driving fixed sheave assembly, and the nut is positioned on a side of the thrust plate body away from the driving movable sheave assembly and abuts against the thrust plate body.

4. The continuously variable transmission according to claim 3, wherein a length occupied by the nut on the main shaft along an axial direction of the main shaft is defined as a first fixing length, a length occupied by the thrust plate assembly on the main shaft along the axial direction of the main shaft is defined as a second fixing length, and a ratio of the first fixing length to the second fixing length is greater than or equal to 0.4 and less than or equal to 0.6.

5. The continuously variable transmission according to claim 4, wherein the connecting portion is made of a first material, the thrust plate body is made of a second material, and a density of the first material is greater than a density of the second material.

6. The continuously variable transmission according to claim 1, wherein the ramp hub assembly defines a sliding groove, the driven roller is at least partially is positioned in the sliding groove, and as the driven movable sheave assembly shifts axially relative to the driven fixed sheave body along the driven shaft, the driven roller rolls in the sliding groove.

7. The continuously variable transmission according to claim 1, wherein the ramp hub assembly further comprises a sliding region, the driven roller moves upward from bottom to top in the sliding region as the driven movable sheave assembly and the driven fixed sheave assembly move away from each other.

8. The continuously variable transmission according to claim 7, wherein the ramp hub assembly further comprises a braking region, the braking region communicates with the sliding region, and the braking region and the sliding region are aligned on the ramp hub assembly in a direction substantially coinciding with a forward rotation direction of the driven shaft.

9. The continuously variable transmission according to claim 8, wherein when the driven shaft is rotated in reverse and the driven roller is positioned in the braking region, the braking region is capable of restricting relative movement of the driven movable sheave assembly relative to the driven fixed sheave assembly along an axial direction of the driven shaft.

10. The continuously variable transmission according to claim 6, wherein the sliding groove comprises a limiting surface, the driven roller rolls on the limiting surface when the driven roller moves in the sliding groove.

11. The continuously variable transmission according to claim 7, wherein the ramp hub assembly further comprises a heat dissipation hole, a minimum width of the sliding groove is defined as a groove width, a ratio of the groove width to the diameter of the heat dissipation hole is greater than or equal to 1.2 and less than or equal to 2.4.

12. The continuously variable transmission according to claim 8, wherein a distance between the heat dissipation hole and the limiting surface is greater than or equal to 2 mm.

13. The continuously variable transmission according to claim 9, wherein the driven roller is rotatably connected to the driven fixed sheave assembly by a roller shaft; the driven roller defines a roller hole, the roller shaft at least partially passes through the roller hole, an annular boss is disposed in the roller hole, an annular groove is defined on the roller shaft, and when the driven roller is mounted to the roller shaft, the annular boss abuts against the annular groove.

14. The continuously variable transmission according to claim 1, wherein the driving movable sheave assembly is slidably connected to the main shaft; the drive belt is sleeved on the main shaft, and the drive belt is at least partially disposed between driving movable sheave assembly and the driving fixed sheave assembly; a bearing is arranged between the drive belt and the main shaft along the radial direction of the main shaft; the driving transmission mechanism further comprises a brake assembly, and the brake assembly comprises a sliding member and a positioning member; the sliding member is arranged between the bearing and the main shaft along the radial direction of the main shaft, and the sliding member is capable of rotating relative to the main shaft; the positioning member is fixedly connected to the main shaft, the sliding member mates with the fixing member, when the drive belt is rotated forward, relative rotation occurs between the drive belt and the sliding member. when the drive belt is rotated in reverse, the drive belt and the sliding member synchronously rotate relative to the fixing member, and at the same time, the drive belt can be driven to slip towards the side close to the driving movable sheave assembly.

15. The continuously variable transmission according to claim 14, wherein the bearing is a unidirectional bearing.

16. The continuously variable transmission according to claim 14, wherein the positioning member is at least partially positioned between the sliding member and the main shaft, the positioning member defines a positioning groove, the sliding member is provided with a protrusion, and the protrusion is at least partially positioned in the positioning groove when the sliding member mates with the positioning member.

17. The continuously variable transmission according to claim 14, wherein a pushing portion is further arranged on a side of the sliding member away from the driving movable sheave assembly, the pushing portion is positioned on a side of the drive belt away from the driving movable sheave assembly, and the pushing portion is capable of driving the drive belt to slip toward the side of the driving movable sheave assembly.

18. The continuously variable transmission according to claim 14, wherein the driving movable sheave assembly and the driven fixed sheave assembly are arranged on the same side of the drive belt; the driving fixed sheave assembly and the driven movable sheave assembly are arranged on the same side of the drive belt.

19. The continuously variable transmission according to claim 1, wherein the ramp hub assembly is fixedly connected to the driven movable sheave assembly, the ramp hub assembly defines a sliding groove; the driven roller is at least partially arranged in the sliding groove; the sliding groove comprises a sliding region and a braking region, the driven roller is positioned in the sliding region when the driven shaft is rotated forward, and the driven roller is positioned in the braking region when the driven shaft is rotated in reverse.

20. The continuously variable transmission according to claim 19, wherein when the driven roller slides in the sliding region, a relative slip can occur between the driven movable sheave assembly and the driven fixed sheave assembly along an axial direction of the driven shaft.

21. An all-terrain vehicle comprising,
a frame;
a vehicle body cover, the vehicle body cover being at least partially disposed on the frame;
travel members at least partially disposed below the frame;
a drive system, the drive system being connected to the travel members in a transmission mode;
**characterized in that** the all-terrain vehicle further comprises a continuously variable transmission as claimed in any one according to claims 1-20, the continuously variable transmission is disposed between the travel members and the drive system and connected to both the travel members and the drive system in a transmission mode.

22. A continuously variable transmission comprising:
a driving transmission mechanism;
a driven transmission mechanism, the driven transmission mechanism being connected to the driving transmission mechanism in a transmission mode; and
a drive belt, the drive belt being connected to the driven transmission mechanism and the driving transmission mechanism in a transmission mode, respectively to transmit a driving force between the driven transmission mechanism and the driving transmission mechanism;
wherein the driving transmission mechanism comprises:
a main shaft;
a driving movable sheave assembly, the driving movable sheave assembly being sleeved on the main shaft and the driving movable sheave assembly mating with the main shaft in a clearance fit, the driving movable sheave assembly further comprising a driving movable sheave body and a centrifugal weight, the centrifugal weight being rotatably connected to the driving movable sheave body;
a driving fixed sheave assembly, the driving fixed sheave assembly being fixedly connected to the main shaft;
a positioning plate assembly, the positioning plate assembly mating with the main shaft in a clearance fit, and the positioning plate assembly is fixedly connected to the driving movable sheave assembly;
a thrust plate assembly, the thrust plate assembly further comprising an elastic member and a thrust plate body, the thrust plate body being fixedly connected to the main shaft, the elastic member being disposed between the positioning plate assembly and the thrust plate body, and the elastic member being capable of applying a pre-load force to make the driving movable sheave assembly move away from the driving fixed sheave assembly.

23. The continuously variable transmission according to claim 22, wherein the driving transmission mechanism further comprises a nut, the nut is sleeved on the main shaft; the thrust plate assembly defines a inner spline, the main shaft defines an outer spline matched with the inner spline, the thrust plate assembly is connected to the main shaft by spline engagement, and one end of the thrust plate assembly abuts against the driving movable sheave assembly; the nut is disposed on the end of the thrust plate assembly away from the driving movable sheave assembly, the nut is threadedly connected to the main shaft and abuts against the thrust plate assembly.

24. The continuously variable transmission according to claim 23, wherein a length occupied by the nut on the main shaft along an axial direction of the main shaft is defined as a first fixing length, a length occupied by the thrust plate assembly on the main shaft along the axial direction of the main shaft is defined as a second fixing length, and a ratio of the first fixing length to the second fixing length is greater than or equal to 0.4 and less than or equal to 0.6.

25. The continuously variable transmission according to claim 24, wherein the first fixing length is greater than or equal to 12.5 mm and less than or equal to 16.5 mm.

26. The continuously variable transmission according to claim 24, wherein the thrust plate assembly comprises a connection portion and a thrust plate body, the inner spline is defined on the connection portion, the thrust plate assembly is connected to the main shaft by the connection portion with spline engagement, and one end of the thrust plate assembly abuts against the driving movable sheave assembly; the nut is disposed on the end of the thrust plate body away from the driving movable sheave assembly, the nut is threadedly connected to the main shaft and abuts against the thrust plate body.

27. The continuously variable transmission according to claim 26, wherein the connection portion is made of steel, and the thrust plate body is made of aluminum, and the connection portion is integrally formed with the thrust plate body.

28. The continuously variable transmission according to claim 26, wherein the connection portion comprises inserts, inserts are radially distributed along an axis of the main shaft and positioned substantially inside the thrust plate body; the insert is a non-circular structure when viewed along the axial extending direction of the thrust plate assembly.

29. The continuously variable transmission according to claim 23, wherein the driving movable sheave assembly comprises a driving movable sheave body and a bushing, the bushing is disposed between the driving movable sheave body and the main shaft, the bushing is fixedly connected to the main shaft, the driving movable sheave body is slidably connected to the bushing, and the end of the thrust plate assembly away from the nut abuts against the bushing.

30. The continuously variable transmission according to claim 29, wherein a radial width at the abutment of the thrust plate assembly and the bushing is smaller than a radial width of the bushing.

31. The continuously variable transmission according to claim 22, wherein an accommodation space is defined between the thrust plate assembly and the main shaft, the centrifugal weight is at least partially positioned within the accommodation space and abuts against the thrust plate assembly; the centrifugal weight is configured such that when the rotational speed of the main shaft exceeds a first threshold, the centrifugal weight exerts a relative force on the thrust plate assembly under the action of a centrifugal force, so that the driving movable sheave assembly slides along an axial direction of the main shaft toward the side away from the thrust plate assembly.

32. The continuously variable transmission according to claim 31, wherein the thrust plate assembly is in a first position relative to the centrifugal weight when the rotational speed of the main shaft is less than a first threshold, and the thrust plate assembly is in a second position relative to the centrifugal weight when the rotational speed of the main shaft reaches a second threshold; the second threshold is greater than the first threshold, a distance along the axis of the main shaft between the axis of a rotary connecting shaft when the thrust plate assembly is at the first position and the axis of the rotary connecting shaft when the thrust plate assembly is at the second position is defined as a maximum sliding distance, and the maximum sliding distance is greater than or equal to 28 mm and less than or equal to 32 mm.

33. The continuously variable transmission according to claim 32, wherein the centrifugal weight comprises an abutment portion and a centrifugal weight body, the limiting portion is positioned on the side of the centrifugal weight body close to the driving movable sheave body, when the thrust plate assembly is at the first position, the limiting portion abuts against the driving movable sheave body.

34. The continuously variable transmission according to claim 33, wherein a preset plane is defined as a plane perpendicular to the rotary connecting shaft, a projection of the axis of the rotary connecting shaft along its own extending direction on the preset plane is defined as a rotational projection point, a projection of the main shaft along the axis direction of the rotary connection shaft on the preset plane is defined as a driving projection line, and a distance between the rotational projection point and the driving projection line is greater than or equal to 84 mm and less than or equal to 88 mm.

35. The continuously variable transmission according to claim 34, wherein the centrifugal weight further includes a center of mass, a distance between a projection of the center of mass on the preset plane along the axial direction of the rotary connecting shaft and the rotational projection point is greater than or equal to 15 mm and less than or equal to 18 mm.

36. The continuously variable transmission according to claim 35, wherein the thrust plate assembly further comprises a connection end and a thrust roller, the thrust roller is rotatably connected to the connection end; the end of the centrifugal close to the weight thrust plate assembly abuts against the thrust roller.

37. The continuously variable transmission according to claim 36, wherein the centrifugal weight further comprises a rolling surface, the thrust roller abuts against the rolling surface when the thrust plate assembly is at the first position, the second position, and any position between the first position and the second position relative to the centrifugal weight.

38. The continuously variable transmission according to claim 37, wherein the centrifugal weight further comprises a limiting portion, the limiting portion is disposed at an end of the side of the centrifugal weight body close to the thrust plate assembly, the position of the thrust plate relative to the limiting portion is defined as a third position when the thrust roller abuts against only the centrifugal weight; a preset straight line is defined as a straight line extending in a direction in which the thrust plate roller receives a support force; when the thrust plate assembly is positioned at the second position, an angle between a projection of the preset straight line along the axial extending direction of the rotary connection shaft on the preset plane and the driving projection line is defined as an angle, α1, when the thrust plate assembly is positioned at the third position, an angle between a projection of the preset straight line along the axial extending direction of the rotary connection shaft on the preset plane and the driving projection line is defined as an angle, α2, the difference between the angle α2 and the angle α1 is greater than or equal to 15 ° and less than or equal to 35 °.

39. The continuously variable transmission according to claim 36, wherein the driving movable sheave assembly further defines a sliding positioning groove, the connecting end is at least partially positioned in the sliding positioning groove and is capable of sliding along the axis direction of the main shaft relative to the sliding positioning groove when both the driving movable sheave assembly and the thrust plate assembly are in the mounted state; a slider accommodation portion is arranged on the side of the connecting end abuts against the sliding positioning groove, a thrust plate slider is arranged in the slider accommodation portion, and the connecting end is slidably connected to the sliding positioning groove by the thrust plate slider.

40. The continuously variable transmission according to claim 22, wherein a driving fixed sheave assembly, the driving fixed sheave assembly being disposed substantially at the end of the main shaft, the driving fixed sheave assembly comprising a working surface facing towards the driving movable sheave assembly; the mounting mode of the driving fixed sheave assembly is arranged as follows: using a rolling process to form a rolling contact surface on the contact surface between the main shaft and the driving fixed sheave assembly, the driving fixed sheave assembly is formed by casting in the circumferential direction of the rolling contact surface, after completing the above steps, the working surface is processed based on the axis of the main shaft as the positioning basis.

41. The continuously variable transmission according to claim 40, wherein a bearing is disposed between the driving movable sheave assembly and the driving fixed sheave assembly, one end of the bearing abuts against the driving fixed sheave assembly, and the other end of the bearing abuts against the driving movable sheave assembly.

42. The continuously variable transmission according to claim 41, wherein the driving movable sheave assembly comprises a driving movable sheave body and a bushing, the bushing is fixedly connected to the main shaft, and the driving movable sheave body is slidely connected to the bushing.

43. The continuously variable transmission according to claim 42, wherein the bearing abuts against one end of the bushing, and the thrust plate assembly abuts against the other end of the bushing.

44. The continuously variable transmission according to claim 43, wherein a sliding region is formed on the side of the thrust plate assembly close to the primary movable sheave assembly, and the driving movable sheave body is capable of sliding along an axial direction of the main shaft in the sliding region.

45. The continuously variable transmission according to claim 40, wherein a limiting hole is defined on the outer surface of the main shaft, the driving fixed sheave assembly is provided with a limiting post, and the limiting post is positioned in the limiting hole when the driving fixed sheave assembly and the main shaft assembly are in the mounted state.

46. The continuously variable transmission according to claim 40, wherein when the main shaft is rotated forward, the drive belt substantially abuts against the working surface.

47. An all-terrain vehicle comprising,
a frame;
a vehicle cover at least partially disposed on the frame;
travel members at least partially disposed below the frame;
a drive system, the drive system being connected to the travel members in a transmission mode;
**characterized in that** the all-terrain vehicle further comprises a continuously variable transmission as claimed in any one according to claims 22-46, the continuously variable transmission is disposed between the travel members and the drive system and connected to both the travel members and the drive system in a transmission mode.

48. A continuously variable transmission comprising:
a driving transmission mechanism;
a driven transmission mechanism, the driven transmission mechanism being connected to the driving transmission mechanism in a transmission mode; and
a drive belt, the drive belt being connected to the driven transmission mechanism and the driving transmission mechanism in a transmission mode, respectively to transmit a driving force between the driven transmission mechanism and the driving transmission mechanism;
wherein the driving transmission mechanism comprises:
a main shaft;
a driving movable sheave assembly, the driving movable sheave assembly being sleeved on the main shaft and the driving movable sheave assembly mating with the main shaft in a clearance fit, the driving movable sheave assembly further comprising a driving movable sheave body and a centrifugal weight, the centrifugal weight being rotatably connected to the driving movable sheave body;
a driving fixed sheave assembly, the driving fixed sheave assembly being fixedly connected to the main shaft;
a positioning plate assembly, the positioning plate assembly mating with the main shaft in a clearance fit, the positioning plate assembly is fixedly connected to the driving movable sheave assembly;
a thrust plate assembly, the thrust plate assembly being sleeved on the main shaft and being fixedly connected to the main shaft; the thrust plate assembly further comprising an elastic member and a thrust plate body, the elastic member being disposed between the positioning plate assembly and the thrust plate body, and the elastic member being capable of applying a pre-load force to make the driving movable sheave assembly move away from the driving fixed sheave assembly;
an accommodation space is defined between the driving movable sheave assembly and the thrust plate assembly, and the centrifugal weight is positioned within the accommodation space, one end of the centrifugal weight abuts against the thrust plate assembly, and the other end of the centrifugal weight is rotatably connected to the driving movable sheave assembly through a rotary connecting shaft; an abutment portion is arranged one end of the rotary connecting shaft, and a connection portion is arranged on the other end of the rotary connecting shaft, the driving movable sheave assembly comprises a first mounting portion and a second mounting portion, and the centrifugal weight is at least partially positioned between the first mounting portion and the second mounting portion, and the rotary connecting shaft passes through the first mounting portion, the centrifugal weight, and the second mounting portion, respectively. when the centrifugal weight and the driving movable sheave assembly are in the mounted state, the abutment portion abuts against the side of the first mounting portion away from the second mounting portion, and the connecting portion abuts against the side of the second mounting part away from the second mounting portion, the rotary connecting shaft mates with the first mounting portion, the second mounting portion, and the centrifugal weight, respectively in a clearance fit.

49. The continuously variable transmission according to claim 48, wherein the thrust plate assembly comprises a connecting portion, the connecting portion and the main shaft are connected to each other by a spline, and the thrust plate body is integrally formed with the connecting portion.

50. The continuously variable transmission according to claim 48, wherein the abutment portion is integrally formed with and fixedly connected to the rotary connecting shaft, and the connecting portion in detachably connected to the rotary connecting shaft.

51. The continuously variable transmission according to claim 48, wherein a bushing is provided between the centrifugal weight and the rotary connecting shaft, the centrifugal weight mates with the bushing in an interference fit, and the bushing mates with the rotary connecting shaft in a clearance fit.

52. The continuously variable transmission according to claim 48, wherein the mounting direction of the rotary connecting shaft is opposite to the forward direction of the main shaft.

53. A continuously variable transmission comprising:
a driving transmission mechanism;
a driven transmission mechanism, the driven transmission mechanism being connected to the driving transmission mechanism in a transmission mode; and
a drive belt, the drive belt being connected to the driven transmission mechanism and the driving transmission mechanism in a transmission mode, respectively to transmit a driving force between the driven transmission mechanism and the driving transmission mechanism;
wherein the driving transmission mechanism comprises:
a main shaft;
a driving movable sheave assembly, the driving movable sheave assembly being sleeved on the main shaft and the driving movable sheave assembly mating with the main shaft in a clearance fit, the driving movable sheave assembly further comprising a driving movable sheave body and a centrifugal weight, the centrifugal weight being rotatably connected to the driving movable sheave body;
a driving fixed sheave assembly, the driving fixed sheave assembly being fixedly connected to the main shaft;
a positioning plate assembly, the positioning plate assembly mating with the main shaft in a clearance fit, the positioning plate assembly is fixedly connected to the driving movable sheave assembly;
a thrust plate assembly, the thrust plate assembly being sleeved on the main shaft and being fixedly connected to the main shaft; the thrust plate assembly further comprising an elastic member and a thrust plate body, the elastic member being disposed between the positioning plate assembly and the thrust plate body, and the elastic member being capable of applying a pre-load force to make the driving movable sheave move away from the driving fixed sheave assembly;
an accommodation space is defined between the driving movable sheave assembly and the thrust plate assembly, and the centrifugal weight is positioned within the accommodation space, one end of the centrifugal weight abuts against the thrust plate assembly, and the other end of the centrifugal weight is rotatably connected to the driving movable sheave assembly through a rotary connecting shaft; the rotary connecting shaft comprises a connecting portion and an abutment portion, and the driving movable sheave assembly comprises a first mounting portion and a second mounting portion, the second mounting portion has an abutment surface facing towards the first mounting portion, when the centrifugal weight and the driving movable sheave assembly are in the mounted state, the rotary connecting shaft passes through the first mounting portion, the centrifugal weight, and the second mounting portion, respectively, the abutment portion abuts against the abutment surface, and the connecting portion abut against the side of the second mounting portion away from the first mounting portion.

54. The continuously variable transmission according to claim 53, wherein the side of the second mounting portion positioned on the abutment surface close to the first mounting portion is defined as a first side of the abutment surface, the side of the second mounting portion positioned on the abutment surface away from the first mounting portion is defined as a second side of the abutment surface, the second mounting portion positioned on the second side of the abutment surface mates with the rotary connecting shaft in a clearance fit, and the second mounting portion positioned on the first side of the abutment surface mates with the rotary connecting shaft in an interference fit.

55. The continuously variable transmission according to claim 53, wherein a bushing is arranged between the centrifugal weight and the rotary connecting shaft, the rotary connecting shaft mates with both the bushing and the first mounting portion in a clearance fit, and the bushing mates with the centrifugal weight in an interference fit.

56. The continuously variable transmission according to claim 53, wherein along the central axis direction of the rotary connecting shaft, the length of the surface contact between the second mounting portion and the rotary connecting shaft is defined as a connection length, and the length of the surface contact between the portion of the second mounting portion positioned on the first side surface of the abutment surface and the rotary connecting shaft is defined as a fixed length, a ratio of the fixed length to the connection length is greater than or equal to 0.6 and less than or equal to 0.75.

57. The continuously variable transmission according to claim 53, wherein the second mounting portion positioned on the first side of the abutment surface has a larger inner diameter than the second side.

58. An all-terrain vehicle comprising
a frame;
a vehicle cover at least partially disposed on the frame;
travel members at least partially disposed below the frame;
a drive system, the drive system being connected to the travel members in a transmission mode;
**characterized in that** the all-terrain vehicle further comprises a continuously variable transmission as claimed in any one of claims 47-56, the continuously variable transmission is disposed between the travel members and the drive system and connected to both the travel members and the drive system in a transmission mode.
